# EUROPÄISCHE PATENTSCHRIFT

(11) **EP 1 636 243 B1**
(45) Veröffentlichungstag und Bekanntmachung des Hinweises auf die Patenterteilung: **06.11.2013**
(21) Anmeldenummer: 04739512.4
(22) Anmeldetag: 02.06.2004
(51) Int. Cl.: C07F 9/655, C07F 9/53, C07F 15/00, B01J 31/24, C07B 53/00

(54) **CHIRALE LIGANDEN ZUR ANWENDUNG IN ASYMMETRISCHEN SYNTHESEN**
CHIRAL LIGANDS FOR APPLICATION IN ASYMMETRIC SYNTHESES
LIGANDS CHIRAUX A UTILISER DANS DES SYNTHESES ASYMETRIQUES

(30) Priorität: 13.06.2003 DE 10327109; 12.08.2003 DE 10337013
(43) Veröffentlichungstag der Anmeldung: 22.03.2006
(73) Patentinhaber: Boehringer Ingelheim International GmbH, 55216 Ingelheim (DE)
(72) Erfinder: MESEGUER, Benjamin, E-43007 Tarragona (ES); ARLT, Dieter, 32657 Lemgo (DE)
(74) Vertreter: Kompter, Hans-Michael
(86) Internationale Anmeldenummer: PCT/EP2004/005930
(87) Internationale Veröffentlichungsnummer: WO 2004/111063

(56) Entgegenhaltungen:
- EP-A- 1 186 609
- EP-A1- 1 095 946
- WO-A1-01/21625
- US-A1- 2002 128 501
- ZHANG Z ET AL: "Synthesis of chiral bisphosphines with tunable bite angles and their applications in asymmetric hydrogenation of beta-ketoesters" JOURNAL OF ORGANIC CHEMISTRY, AMERICAN CHEMICAL SOCIETY. EASTON, US, Bd. 65, Nr. 19, 19. August 2000 (2000-08-19), Seiten 6223-6226, XP002214812 ISSN: 0022-3263 in der Anmeldung erwähnt

## Beschreibung

Die vorliegende Erfindung betrifft Biarylbisphosphine und Zwischenprodukte davon. Weiterhin umfasst der Rahmen der Erfindung aus den Biarylbisphosphinen herstellbare Katalysatoren und deren Anwendung in asymmetrischen Synthesen.

Enantiomerenangereicherte Biarylbisphosphine, wie insbesondere solche, die sich von substituierten Binaphthylen und Biphenylen ableiten, führen als Liganden von Übergangsmetallkomplex-Katalysatoren oft zu guter bis sehr guter Enantioselektivität (s. z.B. Helv. Chim. Acta 1988, 71, 897 - 929; Acc. Chem. Res. 1990, 23, 345 - 350; Synlett 1994, 501-503; Angew. Chem. 2001, 113,40 - 75).

Sterische und elektronische Faktoren, die durch Art und Anordnung von Substituenten am Biaryl-System bzw. innerhalb der Phosphingruppen bestimmt werden, beeinflussen sowohl die Enantioselektivität als auch die Aktivität der aus solchen Liganden hergestellten Katalysatoren.

In Einzelfällen werden Rh- und Ru-Katalysatoren dieser Art für enantioselektive C=C-Doppel-bindungsisomerisierungen und für enantioselektive Hydrierungen industriell verwendet. Die Zahl derartiger industrieller Prozesse ist bislang beschränkt, weil die Zahl der verfügbaren Liganden, die breit für eine größere Zahl von Substraten mit Erfolg eingesetzt werden können, klein ist. Vielmehr zeigen die umfangreichen Untersuchungen auf diesem Gebiet, dass wegen der prinzipiell vorhandenen Substratspezifität des oft für ein ganz bestimmtes Substrat "maßgeschneiderten" Katalysators schon geringfügige Veränderungen innerhalb der gleichen Substratgruppe die erforderliche Enantiomerenreinheit für ein sehr ähnliches Produkt nicht erreichen lassen.

Aus J. Org. Chem. 2000,65,6223 - 6226, WO 01/21625 sind Vertreter einer neuen Gruppe von in 6,6'-Position überbrückten Biphenylbisphosphinen bekannt, die durch Variation der Länge der Alkylengruppierung innerhalb des Brückenelementes eine Anpassung der Katalysatoren, die aus diesen Liganden hergestellt werden, an bestimmte Substrate (hier: ß-Ketoester) ermöglichen, so dass optimierte Enantioselektivitäten erreicht werden. Als Resultat der im J. Org. Chem. publizierten Untersuchung wird eine optimierte Enantioselektivität für einen Katalysator mit einem Liganden mit einer -(CH₂)₄-Gruppierung als Brückenglied ("C4TunaPhos") beschrieben.

Unabhängig von den vorgenannten Publikationen wurde ein einzelner Vertreter dieser Ligandengruppe in EP-A 1 095 946 veröffentlicht.

In der EP-A 1 186 609 werden enantiomerenreine (5,5'-Dichlor-6,6'-dimethoxybiphenyl-2,2'-diyl)-bis-phosphine als Liganden vorgeschlagen, bei denen die Phosphinogruppen durch 2-Furyl, 2-N-Methylpyrrolyl, 4-Fluorphenyl, 3,5-Di-methoxyphenyl oder 3,5-Dimethylphenyl substituiert sind.

Es besteht jedoch weiterhin das Bedürfnis, eine Gruppe von Liganden bzw. daraus herstellbaren Katalysatoren bereitzustellen, die sowohl ein allgemein hohes Niveau an Enantioselektivität und Aktivität ermöglichen, als auch eine Anpassung an ein bestimmtes Substrat durch Variation der Substituenten am Ligandensystem in einfacher Weise zulassen.

Gegenstand der vorliegenden Erfindung sind nun Verbindungen der Formel (I), 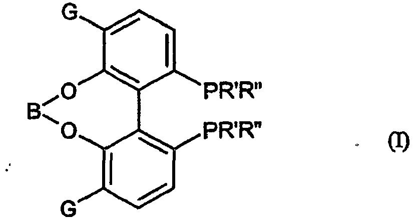 in der
- B: für eine bivalente Gruppierung der Formel -(CHR¹)ₙ-(R²C=CR³)-(CHR⁴)ₘ steht, wobei R¹, R², R³ und R⁴ jeweils unabhängig voneinander für Wasserstoff oder Alkyl, vorzugsweise für C₁-C₆-Alkyl stehen, und n und m jeweils unabhängig voneinander für null oder eine ganze Zahl von 1 bis 8 stehen, wobei jedoch die Summe aus n und m 1 bis 8, vorzugsweise 2 oder 4 und besonders bevorzugt 2 beträgt, und in der weiterhin
- G: für Chlor und
- R' und R": jeweils unabhängig voneinander für Aryl oder Alkyl stehen oder
in der
- B: für eine bivalente Gruppierung der Formel -(CHR¹)ₙ-(CR²R³)ₘ-(CHR⁴)ₒ steht, wobei R¹, R², R³ und R⁴ jeweils unabhängig voneinander für Wasserstoff oder Alkyl, vorzugsweise für C₁-C₆-Alkyl stehen, und n, m und o jeweils unabhängig voneinander für null oder eine ganze Zahl von 1 bis 8 stehen, wobei jedoch die Summe aus n, m und o 1 bis 8, vorzugsweise 3 oder 4, beträgt, und in der weiterhin G für Chlor und R' und R" jeweils unabhängig voneinander für Aryl oder Alkyl stehen.

Von der Erfindung sind sowohl die reinen Stereoisomere als auch beliebige Mischungen davon, wie insbesondere racemische Mischungen umfasst. Bevorzugt sind die stereoisomerenange-reicherte Verbindungen der Formel (I) die eine Stereoisomerenreinheit von 95 % und mehr, besonders bevorzugt 99 % oder mehr aufweisen. Bei Verbindungen der Formel (I) die in zwei enantiomeren Formen auftreten können, ist dementsprechend ein ee von 90 % oder mehr bevorzugt, besonders bevorzugt ein ee von 98 % und ganz besonders bevorzugt ein ee von 99 % oder mehr.

Im Rahmen der Erfindung können alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Weise kombiniert werden.

Enantiomerenangereichert im Sinne der Erfindung bedeutet enantiomerenreine Verbindungen oder Mischungen von Enantiomeren einer Verbindung, in denen ein Enantiomer in einem Enantiomerenüberschuss, im Folgenden auch ee (enantiomeric excess) genannt, im Vergleich zum anderen Enantiomer vorliegt. Bevorzugt beträgt dieser Enantiomerenüberschuss 10 bis 100 % ee, besonders bevorzugt 80 bis 100 % ee und ganz besonders bevorzugt 95 bis 100 % ee.

Die Begriffe Stereoisomer bzw. stereoisomerenangereichert werden in Analogie für Verbindungen verwendet bei denen auch Diastereomere auftreten können.

Alkyl steht beispielsweise für unverzweigte, verzweigte, cyclische oder acyclische C₁-C1₂-Alkylreste, die entweder nicht oder zumindest teilweise durch Fluor, Chlor, oder unsubstituiertes oder substituiertes Aryl, oder C₁-C₆-Alkoxy substituiert sein können. Besonders bevorzugt steht Alkyl für verzweigte, cyclische oder acyclische C₁-C₁₂-Alkylreste, die nicht weiter substituiert sind.

Aryl steht beispielsweise für carbocyclische aromatische Reste mit 6 bis 18 Gerüstkohlenstoffatomen oder heteroaromatische Reste mit 5 bis 18 Gerüstkohlenstoffatomen, in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können. Weiterhin können die carbocyclischen aromatischen Reste oder heteroaromatische Reste mit bis zu fünf gleichen oder verschiedenen Substituenten pro Cyclus substituiert sein, ausgewählt aus der Gruppe freies oder geschütztes Hydroxy, Iod, Brom, Chlor, Fluor, Cyano, freies oder geschütztes Formyl, C₁-C₁₂-Alkyl wie zum Beispiel Methyl, Ethyl, n-Propyl, iso-Propyl, n-Butyl, tert.-Butyl, Cyclohexyl, n-Hexyl, n-Octyl oder iso-Octyl, C₆-C₁₂-Aryl, wie zum Beispiel Phenyl, C₁-C₆-Alkoxy, Tri(C₁-C₆-alkyl)siloxyl wie zum Beispiel Trimethylsiloxyl, Triethylsiloxyl und Tri-n-butylsiloxyl.

Beispiele für carbocyclische aromatische Reste mit 6 bis 18 Gerüstkohlenstoffatomen sind zum Beispiel Phenyl, Naphtyl, Phenanthrenyl, Anthracenyl oder Fluorenyl, heteroaromatische Reste mit 5 bis 18 Gerüstkohlenstoffatomen in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können sind beispielsweise Pyridinyl, Oxazolyl, Thiophen-yl, Benzofuranyl, Benzothiophen-yl, Dibenzofuran-yl, Dibenzothiophen-yl, Furanyl, Indolyl, Pyridazinyl, Pyrazinyl, Pyrimidinyl, Thiazolyl, Triazolyl oder Chinolinyl.

**Geschütztes Formyl** steht im Rahmen der Erfindung für einen Formyl-Rest, der durch Überführung in ein Aminal, Acetal oder ein gemischtes Aminalacetal geschützt ist, wobei die Aminale, Acetale und gemischten Aminalacetale acyclisch oder cyclisch sein können.

Geschütztes Hydroxy steht im Rahmen der Erfindung für einen Hydroxy-Rest, der durch Überführung in ein Acetal, Carbonat, Carbamat oder Carboxylat geschützt ist. Beispiele dafür sind die Überführung in ein Tetrahydropyranyladdukt, in ein Benzyloxycarbonyl-, Allyloxycarbonyl-oder ein Tert.-Butyloxycarbonyl-Derivat.

Im Folgenden werden die Vorzugsbereiche für Verbindungen der Formel (I) definiert.
- R¹, R², R³ und R⁴: stehen bevorzugt jeweils unabhängig voneinander für Wasserstoff, Methyl, Ethyl, n-Propyl, iso-Propyl, n-Butyl und n-Pentyl, besonders bevorzugt für Wasserstoff, Methyl, Ethyl, n-Propyl und iso-Propyl sowie ganz besonders bevorzugt jeweils identisch für Wasserstoff.
- R' und R": stehen bevorzugt jeweils unabhängig voneinander, weiter bevorzugt jeweils identisch für C₃-C₈-Alkyl oder C₅-C₁₀-Aryl, das nicht, einfach oder mehrfach mit Resten substituiert ist, die ausgewählt sind aus der Gruppe Chlor, Fluor, Cyano, Phenyl, C₁-C₆-Alkoxy und C₁-C₆-Alkyl, besonders bevorzugt für Cyclopentyl, Cyclohexyl, Cycloheptenyl, Phenyl, o-, m-, p-Tolyl, 3,5-dimethylphenyl, 3,5-Di-tert.-butylphenyl, 3,5-Dimethyl-4-Methoxyphenyl, 3,5-Di-tert.-butyl-4-methylphenyl, 4-Trifluormethylphenyl, 4-Fluorphenyl, 2-, 3-Furyl, 2-, 3-Thiophen-yl, 2-N-Methyl-pyrrolyl, N-Methyl-2-indolyl und 2-Thiazolyl.

Als besonders bevorzugte Verbindungen der Formel (I) seien genannt:
(R)- und (S)-[5,5'-Dichlor-6,6-(cis-1,4-but-2-endioxy)-biphenyl-2,2'-diyl]-bis-[(di-phenyl)phosphin, (R)- und (S)-[5,5'-Dichlor-6,6-(cis-1,4-but-2-endioxy)-biphenyl-2,2'-diyl]-bis-[(di-cyclohexyl)phosphin, (R)- und (S)-[5,5'-Dichlor-6,6'-(cis-1,4-but-2-endioxy)-biphenyl-2,2'-diyl]-bis-[(di-3,5-di-tert.-butyl-4-methoxyphenyl)phosplun, (R)- und (S)-[5,5'-Dichlor-6,6'-(cis-1,4-but-2-endioxy)-biphenyl-2,2'-diyl]-bis-[(di-3,5-dimethylphenyl)phosphin, (R)- und (S)-[5,5'-Dichlor-6,6'-(cis-1,4-but-2-endioxy)-biphenyl-2,2'-diyl]-bis-[(di-3,5-dimethyl-4-methoxyphenyl)phosphin, (R)-und (S)-[5,5'-Dichlor-6,6'-(cis-1,4-but-2-endioxy)-biphenyl-2,2'-diyl]-bis-[(di-4-fluorphenyl)phosphin sowie (R)- und (S)-[5,5'-Dichlor-6,6'-(cis-1,4-but-2-endioxy)-biphenyl-2,2'-diyl]-bis-[(di-3,5-di-tert.-butylphenyl)phosphin sowie die entsprechenden trans-Verbiridungen, wobei die genannten cis-Verbindungen bevorzugt sind sowie
(R)- und (S)-[5,5'-Dichlor-6,6'-(1,3-propandioxy)-biphenyl-2,2'-diyl]-bis-[(di-phenyl)phosphin, (R)- und (S)-[5,5'-Dichlor-6,6'-(1,3-propandioxy)-biphenyl-2,2-diyl]-bis-[(di-cylclohexyl)phosphin, (R)- und (S)-[5,5'-Dichlor-6,6'-(1,3-propandioxy)-biphenyl-2,2'-diyl]-bis-[(di-3,5-di-tert.-butyl-4-methoxyphenyl)phosphin, (R)- und (S)-[5,5'-Dichlor-6,6'-(1,3-propandioxy)-biphenyl-2,2'-diyl]-bis-[(di-3,5-dimethylphenyl)phosphin, (R)- und (S)-[5,5'-Dichlor-6,6'-(1,3-propandioxy)-biphenyl-2,2'-diyl]-bis-[(di-3,5-dimethyl-4-methoxyphenyl)phosphin, (R)- und (S)-[5,5'-Dichlor-6,6'-(1,3-prapandioxy)-biphenyl-2,2'-diyl]-bis-[(di-4-fluorphenyl)phosphin sowie (R)- und (S)-[5,5'-Di-chlor-6,6'-(1,3-propandioxy)-biphenyl-2,2'-diyl]-bis-[(di-3,5-di-tert.-butylphenyl)phosphin, die stereoisomeren (R)- und (S)-[5,5'-Dichlor-6,6'-(1,3-butandioxy)biphenyl-2,2'-diyl]-bis(diphenyl-phosphine], die stereoisomeren (R) und (S)-[5,5'-Diohlor-6,6'-(1,3-butandioxy)biphenyl-2,2'-diyl]-bis(diphenyl-phosphine) sowie beliebige Mischungen der Enantiomeren.

Die erfindungsgemäßen Verbindungen der Formel (I) können beispielsweise in analoger Weise zu an sich bekannten Verfahren hergestellt werden, die für die Synthese von in 6,6'-Position überbrückten Biphenylbisphosphinen bereits beschrieben worden sind

So kann man beispielsweise aus 5,5'-Dichlor-6,6'-dimethoxybiphenyl-2,2'-diyl]bisphosphin oder analogen Verbindungen durch Etherspaltung die entsprechenden 6,6'-Dihydroxybisphosphine erhalten, die anschließend durch Behandlung mit Verbindungen der Formel (II)

X¹-B-X² (II)

in der
- B: die in der Legende von Formel (I) angegebene Bedeutung und Vorzugsbereiche besitzt und in der
- X¹ und X²: jeweils unabhängig voneinander für Chlor, Brom oder Jod stehen,
unter an sich bekannten Bedingungen (s. z.B. J. Org. Chem. 2000, 65, 6224) zu den erfindungsgemäßen Verbindungen der Formel (I) umgesetzt werden.

Zur Herstellung von Verbindungen der Formel (I) geht man vorzugsweise so vor, dass
in einem Schritt a)
Verbindungen der Formel (V) 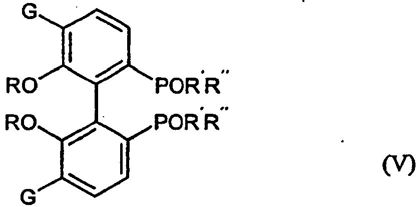 durch Etherspaltung in Verbindungen der Formel (III) überführt werden, 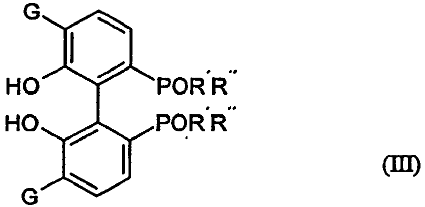 in einem Schritt b)
die Verbindungen der Formel (III) durch Umsetzung mit Verbindungen der Formel (II) in Gegenwart von Base zu Verbindungen der Formel (IV) umgesetzt werden, 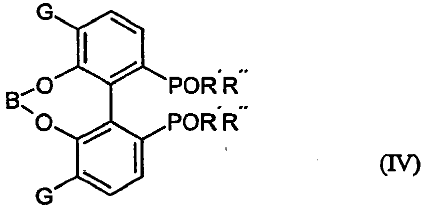 und in einem Schritt c)
die Verbindungen der Formel (IV) zu Verbindungen der Formel (I) reduziert werden, 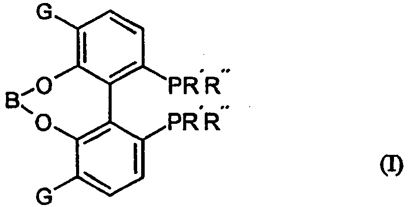 wobei B, G, R' und R" die gleichen Bedeutungen und Vorzugsbereiche besitzen, die oben unter den Formeln (I) und (II) bereits definiert worden sind.
- R: steht in Formel (V) für C₁-C₆-Alkyl.

Sofern nicht bereits enantiomerenangereicherte Verbindungen der Formel (V) zur Herstellung von Verbindungen der Formel (I) eingesetzt werden, lassen sich vorzugsweise die Verbindungen der Formel (IV) in an sich bekannter Weise beispielsweise durch Umsetzung mit einem chiralen Hilfsreagenz oder durch kontinuierliche oder diskontinuierliche Chromatographie bei Enantiomeren an einem chiralen Säulenmaterial in die Stereoisomeren auftrennen.

Die Etherspaltung gemäß Schritt a) kann beispielsweise in an sich bekannter Weise durch Umsetzung mit BBr₃ und anschließender Behandlung mit Wasser erfolgen.

Die Umsetzung der Verbindungen der Formel (III) mit Verbindungen der Formel (II) gemäß Schritt b) wird bevorzugt in organischem Lösungsmittel in Gegenwart von Basen durchgeführt.

Als Lösungsmittel eignen sich insbesondere Alkohole, wie beispielsweise Methanol, Ethanol, Propanol, Ethylenglykol oder Ethylenglykolmonomethylether und amidische Lösungsmittel wie z.B. N,N-Dimethylformamid, N,N-Dimethylacetamid oder N-Methylpyrrolidon oder Mischungen der genannten Lösungsmittel.

Als Basen können beispielsweise Alkali- und Erdalkali-Verbindungen wie Oxide, Hydroxide, Carbonate oder Alkoholate verwendet werden, beispielsweise seien genannt: Calciumoxid, Natriumhydroxid, Kaliumcarbonat oder Natriummethanolat. Es ist auch möglich, tertiäre Amine wie z.B. Triethylamin oder Tributylamin als Basen einzusetzen.

Das molare Verhältnis zwischen eingesetzter Verbindung der Formel (III) und Verbindung der Formel (II) liegt vorzugsweise zwischen 1:1 und 1:4; i.A. genügt auch für eine vollständige Umsetzung ein geringfügiger Überschuss an Verbindung der Formel (II). Die Base wird vorzugsweise in mindestens äquivalenter Menge zur Verbindung der Formel (III) eingesetzt. Bei der Verwendung von im Lösungsmittel unlöslichen Basen, beispielsweise von Kaliumcarbonat in DMF, ist es zweckmäßig, die vier- bis zehnfache molare Menge zu verwenden und gleichzeitig für eine intensive Durchmischung der Suspension zu sorgen.

Die Reaktion gemäß Schritt b) kann auch in einem zweiphasigen System ausgeführt werden, wobei als nicht-wässrige Phase Lösungsmittel eingesetzt werden, in denen das entstehende Produkt der Formel (IV) zumindest überwiegend löslich ist, dafür eignet sich beispielsweise Dichlormethan. Es ist zweckmäßig, bei dieser Variante der Umsetzung Phasentransferkatalysatoren wie z.B. quatäre Ammonium- oder Phosphinsalze und Tetrabutylammnoniumsalze zu verwenden. Bevorzugt sind Tetrabutylammoniumsalze.

Die Reaktionstemperatur bei der Umsetzung von Verbindungen der Formel (III) zur Herstellung der Verbindungen der Formel (IV) kann beispielsweise im Bereich von etwa 20°C bis 100°C, vorzugsweise im Bereich von 20°C bis 80°C, liegen.

Die Reduktion der Verbindungen der Formel (IV) zu den Verbindungen der Formel (II) gemäß Schritt c) wird vorzugsweise nach an sich bekannten Methoden durchgeführt, beispielsweise durch Umsetzung mit Trichlorsilan in inerten Lösungsmitteln wie Toluol oder Xylol und in Gegenwart von tertiären Aminen wie Tri-n-butylamin bei Rückflusstemperatur, (s. z.B. EP-A 398 132, EP-A 749 973 sowie EP-A 926 152).

Weiterhin können die erfindungsgemäßen Verbindungen der Formel in denen der Substituent in 6,6'-Stellung ein Alkendiyl-Rest ist auch dadurch hergestellt werden, dass die Verbindungen der Formel (III) mit der vorstehend genannten Bedeutung zunächst
- mit einer Verbindung der Formel (VIa) oder (VIb) oder sukzessive mit zwei verschiedenen Verbindungen der Formeln (VIa) und (VIb)

   X³-(CHR¹)ₙ-(R²C=CHR⁵) (VIa)

   X⁴-(CHR⁴)ₘ(R³C=CHR⁶) (VIb)

   in denen X³ und X⁴ jeweils für Chlor, Brom, Iod oder ein Sulfonat, bevorzugt für Chlor, Brom oder Iod stehen und
   R¹, R², R³ und R⁴ die oben stehend genannte Bedeutung einschließlich der Vorzugsbereiche besitzen und
   R⁵ und R⁶ jeweils unabhängig voneinander für Wasserstoff oder C₁-C₄-Alkyl stehen
   zu Verbindungen der Formel (VII) umgesetzt werden 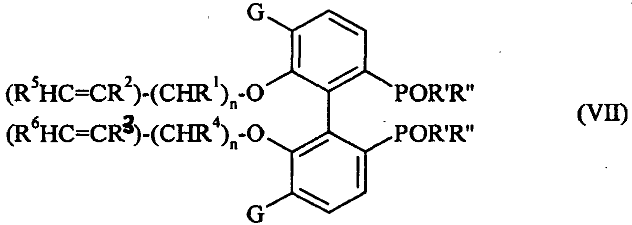 und
   die Verbindungen der Formel (VII) dann in Gegenwart eines Olefin-Metathesekatalysators in Verbindungen der Formel (IV) überführt werden.

Die Verbindungen der Formel (IV) können dann in oben beschriebener Weise zu den Verbindungen der Formel (I) reduziert werden.

Für die Umsetzung der Verbindungen der Formel (III) mit Verbindungen der Formel (VIa) und oder (VIb) gelten die für Schritt b) des erstgenannten Verfahren beschriebenen Lösungsmittel, Temperaturen, Molverhältnisse und sonstigen Reaktionsparameter in gleicher Weise.

Für die Umsetzung der Verbindungen der Formel (VII) zu Verbindungen der Formel (IV) eignen sich als Olefin-Metathesekatalysatoren insbesondere Ruthenium-Carben-Komplexe. Bevorzugte Ruthenium-Carben-Komplexe sind beispielsweise solche der Formeln (Xa) und (Xb) 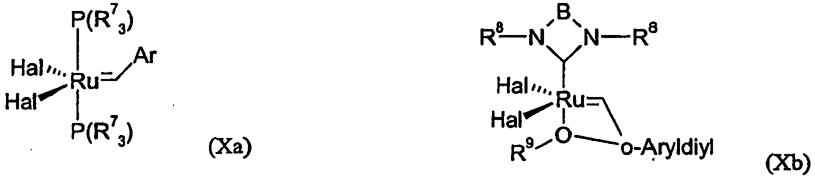 wobei in Formel (Xa)
- Ar: für Aryl, Hal für Chlor, Brom oder Iod und R⁷ jeweils unabhängig für C₁-C₁₂-Alkyl, C₅-C₁₂-Aryl oder C₆-C₁₃-Arylalkyl steht
Und wobei in Formel (Xb)
o-Aryldiyl für einen ortho-divalenten C₅-C₂₄-Arylrest steht, der weiterhin bis zu vier Reste tragen kann, wie sie bereits für Aryl obenstehend definiert worden sind, Hal für Chlor, Brom oder Iod, B für gegebenenfalls ein- oder zweifach durch C₁-C₁₂-Alkyl, C₅-C₁₂-Aryl oder C₆-C₁₃-Arylalkyl substituiertes 1,2-Ethandiyl- oder 1,2-Ethendiyl und R⁸ jeweils unabhängig für C₁-C₁₂-Alkyl, C₅-C₁₂-Aryl oder C₆-C₁₃-Arylalkyl steht.

Das letztgenannte Verfahren zur Herstellung von Verbindungen der Formel (IV) ist ebenso von der Erfindung umfasst, wie die zur Herstellung von Verbindungen der Formel (I) benötigten Verbindungen der Formeln (IV) und (VII) und zwar sowohl in Form ihrer reinen Stereoisomeren als auch in beliebigen Mischungen davon wie insbesondere der racemischen Mischung.

Als Verbindungen der Formel (VII) seien genannt:
(R)- und (S)-[5,5'-Dichlor-6,6'-(bis-allyloxy)-biphenyl-2,2'-diyl]-bis-[(di-cyclohexyl)phosphinoxid, (R)- und (S)-[5,5'-Dichlor-6,6'-(bis-allyloxy)-biphenyl-2,2'-diyl]-bis-[(di-3,5-di-tert.-butyl-4-methoxyphenyl)phosphinoxid, (R)- und (S)-[5,5'-Dichlor-6,6'-(bis-allyloxy)-biphenyl-2,2'-diyl]-bis-[(di-3,5-dimethylphenyl)phosphinoxid, (R)- und (S)-[5,5'-Dichlor-6,6'-(bis-allyloxy)-biphenyl-2,2'-diyl]-bis-[(di-3,5-dimethyl-4-methoxyphenyl)phosphinoxid, (R)- und (S)-[5,5'-Dichlor-6,6'-(bis-allyloxy)-biphenyl-2,2'-diyl]-bis-[(di-4-fluorphenyl)phosphinoxid sowie (R)- und (S)-[5,5'-Di-chlor-6,6'-(bis-allyloxy)-biphenyl-2,2'-diyl]-bis-[(di-3,5-di-tert.-butylphenyl)phosphinoxid.

Als Verbindungen der Formel (IV) seien genannt:
(R)- und (S)-[5,5'-Dichlor-6,6'-(cis-1,4-but-2-en-dioxy)-biphenyl-2,2'-diyl]-bis-[(di-cyclohexyl)-phosphinoxid, (R)- und (S)-[5,5'-Dichlor-6,6'-(cis-1,4-but-2-en-dioxy)-biphenyl-2,2'-diyl]-bis-[(di-3,5-di-tert.-butyl-4-methoxyphenyl)phosphinoxid, (R)- und (S)-[5,5'-Dichlor-6,6'-(cis-1,4-but-2-en-dioxy)-biphenyl-2,2'-diyl]-bis-[(di-3,5-dimethylphenyl)phosphinoxid, (R)- und (S)-[5,5'-Dichlor-6,6'-(cis-1,4-but-2-en-dioxy)-biphenyl-2,2'-diyl]-bis-[(di-3,5-dimethyl-4-methoxyphenyl)phosphinoxid, (R)- und (S)-[5,5'-Dichlor-6,6'-(cis-1,4-but-2-en-dioxy)-biphenyl-2,2'-diyl]-bis-[(di-4-fluor-phenyl)phosphinoxid sowie (R)- und (S)-[5,5'-Dichlor-6,6'-(cis-1,4-but-2-en-dioxy)-biphenyl-2,2'-diyl]-bis-[(di-3,5-di-tert-butylphenyl)phosphinoxid sowie die jeweiligen trans-Verbindungen, wobei die cis-Verbindungen bevorzugt sind sowie (R)- und (S)-[5,5'-Dichlor-6,6'-(1,3-propan-dioxy)-biphenyl-2,2'-diyl]-bis-[(di-cyclohexyl)phosphinoxid, (R)- und (S)-[5,5'-Dichlor-6,6'-(1,3-propandioxy)-biphenyl-2,2'-diyl]-bis-[(di-3,5-di-tert.-butyl-4-methoxyphenyl)phosphinoxid, (R)-und (S)-[5,5'-Dichlor-6,6'-(1,3-propandioxy)-biphenyl-2,2'-diyl]-bis-[(di-3,5-dimethylphenyl)phosphinoxid, (R)- und (S)-[5,5'-Dichlor-6,6'-(1,3-propandioxy)-biphenyl-2,2'-diyl]-bis-[(di-3,5-dimethyl-4-methoxyphenyl)phosphinoxid, (R)- und (S)-[5,5'-Dichlor-6,6'-(1,3-propandioxy)-biphenyl-2,2'-diyl]-bis-[(di-4-fluorphenyl)phosphinoxid sowie (R)- und (S)-[5,5'-Dichlor-6,6'-(1,3-propandi-oxy)-biphenyl-2,2'-diyl]-bis-[(di-3,5-di-tert.-butylphenyl)phosphinoxid, die stereoisomeren (R)-[5,5'-Dichlor-6,6'-(1,3-butandioxy)biphenyl-2,2'-diyl]-bis(diphenyl-phosphinoxide), die stereoisomeren (S)-[5,5'-Dichlor-6,6'-(1,3-butandioxy)biphenyl-2,2'-diyl]-bis(diphenyl-phosphinoxide) sowie beliebige Mischungen der Enantiomeren.

Die Verbindungen der Formel (I), vorzugsweise in stereoisomerenangereicherter Form, eignen sich insbesondere als Liganden für die Herstellung von Übergangsmetallkomplexen, die als Katalysatoren für Verfahren zur Herstellung von enantiomerenangereicherten Verbindungen verwendet werden können.

Die Vorzugsbereiche für Verbindungen der Formel (I) gelten im Folgenden in gleicher Weise wie oben beschrieben.

Daher sind von Erfindung sowohl Übergangsmetallkomplexe enthaltend Verbindungen der Formel (I) umfasst, als auch Katalysatoren, die die erfindungsgemäßen Übergangsmetallkomplexe enthalten.

Bevorzugte Übergangsmetallkomplexe sind dabei solche, die durch Umsetzung von Verbindungen der Formel (I) in Gegenwart von Übergangsmetallverbindungen erhältlich sind.

Bevorzugte Übergangsmetallverbindungen sind Verbindungen von Rhodium, Iridium, Ruthenium, Palladium und Nickel, wobei solche von Rhodium, Iridium und Ruthenium weiter bevorzugt sind.

Bevorzugte Übergangsmetallverbindungen sind beispielsweise solche der Formel (VIIIa)

M(Y¹)₃ (VIIIa)

in der
- M: für Ruthenium, Rhodium, Iridium und
- Y¹: für Chlorid, Bromid, Acetat, Nitrat, Methansulfonat, Trifluormethansulfonat oder Acetylacetonat und
oder Übergangsmetallverbindungen der Formel (VIIIb)

M(Y²)ₚB¹₂ (VIIIb)

in der
- M: für Ruthenium, Rhodium, Iridium und
- Y²: für Chlorid, Bromid, Acetat, Methansulfonat, Trifluormethansulfonat, Tetrafluoroborat, Hexafluorophosphat Perchlorat, Hexafluoroantimonat, Tetra(bis-3,5-trifluormethyl-phenyl)borat oder Tetraphenylborat steht und
- P: für Rhodium und Iridium für 1 und für Ruthenium für 2 steht,
- B¹: jeweils für ein C₂-C₁₂-Alken wie beispielsweise Ethylen oder Cycloocten, oder ein Nitril wie beispielsweise Acetonitril, Benzonitril oder Benzylnitril steht, oder
- B¹₂: zusammen für ein (C₄-C₁₂)-Dien wie beispielsweise Narbornadien oder 1,5-Cyclooctadien steht
oder Übergangsmetallverbindungen der Formel (VIIIc)

[MB²Y¹₂]₂ (VIIIc)

in der
- M: für Ruthenium und
- B²: für Arylreste wie zum Beispiel Cymol, Mesityl, Phenyl oder Cyclooctadien, Norbornadien oder Methylallyl steht
oder Übergangsmetallverbindungen der Formel (VIIId)

Me₃[M(Y³)₄] (VIIId),

wobei
- M: für Iridium oder Rhodium und
- Y³: für Chlorid oder Bromid steht und
- Me: für Lithium, Natrium, Kalium, Ammonium oder organisches Ammonium steht und
oder Übergangsmetallverbindungen der Formel (VIIIe)

[M(B³)₂]An (VIIIe),

wobei
- M: für Iridium oder Rhodium und
- B³: für ein (C₄-C₁₂)-Dien wie beispielsweise Norbomadien oder 1,5-Cyclooctadien steht
- An: für ein nicht oder schwach koordinierendes Anion wie zum Beispiel Methansulfonat, Trifluormethansulfonat, Tetrafluoroborat, Hexafluoro-phosphat Perchlorat, Hexafluoroantimonat, Tetra(bis-3,5-trifluormethylphenyl)borat oder Tetraphenylborat steht.

Darüber hinaus sind als Übergangsmetallverbindungen Cyclopentadienyl₂Ru, Rh(acac)(CO)₂, Ir(pyridin)₂(1,5-Cyclooctadien) oder mehrkernige verbrückte Komplexe wie beispielsweise [Rh(1,5-cyclooctadien)Cl]₂ und [Rh(1,5-cyclooctadien)Br]₂, [Rh(Ethen)₂Cl]₂, [Rh(Cyclo-octen)₂Cl]₂, [Ir(1,5-cyclooctadien)Cl]₂ und [Ir(1,5-cyclooctadien)Br]₂, [Ir(Ethen)₂Cl]₂, und [Ir(Cycloocten)₂Cl]₂ bevorzugt.

Ganz besonders bevorzugt werden als Übergangsmetallmetallverbindungen eingesetzt:
[Rh(cod)Cl]₂, [Rh(cod)₂Br], [Rh(cod)₂]ClO₄, [Rh(cod)₂]BF₄, [Rh(cod)₂]PF₆, [Rh(cod)₂]OTf, [Rh(cod)₂]BAr₄ (Ar = 3,5-bistrifluormethylphenyl) [Rh(cod)₂]SbF₆ RuCl₂(cod), [(Cymol)RuCl₂]₂, [(Benzol)RuCl₂]₂. [(Mesityl)RuCl₂]₂, [(Cymol)RuBr₂]₂, [(Cymol)RuI₂]₂, [(Cymol)Ru(BF₄)₂]₂, [(Cymol)Ru(PF₆)₂]₂, [(Cymol)Ru(BAr₄)₂]₂, (Ar = 3,5-bistrifluormethylphenyl), [(Cymol)Ru-(SbF₆)₂]₂, [Ir(cod)₂Cl]₂, [Ir(cod)₂]PF₆, [Ir(cod)₂]ClO₄, [Ir(cod)₂]SbF₆ [Ir(cod)₂]BF₄, [Ir(cod)₂]OTf, [Ir(cod)₂]BAr₄ (Ar = 3,5-bistrifluormethylphenyl) RuCl₃, RhCl₃, [Rh(nbd)Cl]₂, [Rh(nbd)₂Br], [Rh(nbd)₂]ClO₄, [Rh(nbd)₂]BF₄, [Rb(nbd)₂]PF₆, [Rh(nbd)₂]OTf, [Rh(nbd)₂]BAr₄ (Ar = 3,5-bistrifluormethylphenyl) [Rh(nbd)₂]SbF₆ RuCl₂(nbd), [Ir(nbd)₂]PF₆, [Ir(nbd)₂]ClO₄, [Ir(nbd)₂]SbF₆ [Ir(nbd)₂]BF₄, [Ir(nbd)₂]OTf, [Ir(nbd)₂]BAr₄ (Ar = 3,5-bistrifluormethylphenyl), Ir(pyridin)₂(nbd), RuCl₃. [Ru(DMSO)₄Cl₂], [Ru(CH₃CN)₄Cl₂], [Ru(PhCN)₄Cl₂], [Ru(cod)Cl₂]ₙ, [Ru(cod)(Meth-allyl)_{2]} und [Ru(acetylacetonat)₃].

Besonders bevorzugte Übergangsmetallkomplexe sind solche der Formeln (VIIIa,b,c)

[M(I)Hal]₂ (VIIIa)

[M(cod)(I)]An (VIIIb)

[M(nbd)(I)]An (VIIIc)

in denen
- M: für Rhodium oder Iridium steht und
- Hal: für Chlorid, Bromid oder Iodid und
- (I): für eine Verbindung der Formel (I) steht und
- An: für ein nicht oder schwach koordinierendes Anion wie zum Beispiel Methansulfonat, Trifluormethansulfonat, Tetrafluoroborat, Hexafluoro-phosphat Perchlorat, Hexafluoro-antimonat, Tetra(bis-3,5-trifluormethylphenyl)borat oder Tetraphenylborat steht und

Verbindungen der Formeln (IXa,b,c,d,e,f)

[Ru(AcO)₂(I)] (IXa)

[Ru₂Cl₄(I)₂NEt₃] (IXb)

[RuHal(I)(AR)]ₐ (IXc)

[Ru(I)](An)₂ (IXd)

[{RuHal(I)}₂(□-Hal)₃]- [(R''')₂NH₂]⁺ (IXe)

[RuHal₂(1](Diamin)] (IXf)

in denen
- Hal: für Chlorid, Bromid oder Iodid und
- (I): für eine Verbindung der Formel (I) steht und
- An: für ein nicht oder schwach koordinierendes Anion wie zum Beispiel Methansulfonat, Trifluormethansulfonat, Tetrafluoroborat, Hexafluoro-phosphat Perchlorat, Hexafluoroantimonat, Tetra(bis-3,5-trifluormethylphenyl)borat oder Tetraphenylborat steht und
- R''': jeweils unabhängig für C₁-C₆-Alkyl steht und
- Diamin: für chirale 1,2-Diamine steht, die vorzugsweise ausgewählt sind aus der Gruppe (S,S) und (R,R)-1,2-Diphenyl-ethylen-diamin und (R)- oder (S)-1,1-Bis(4-meth-oxyphenyl)-3-methyl-1,2-butandiamin und
- AR: für einen Arenliganden steht, der vorzugsweise ausgewählt ist aus der Gruppe Benzol, p-Cymol und Mesitylen.

Die Herstellung solcher Komplextypen ist prinzipiell bekannt und beispielsweise analog zu Chemistry Letters, 1851, 1989; J. Organomet. Chem., 1992, 428, 213 (VIIIa,b,c); J. Chem. Soc., Chem. Commun., 922, 1985 (IXa,b,c,d), EP-A 945 457 (IXe) und Pure Appl. Chem.,Vol. 71,8,1493-1501, 1999 (IXf) möglich.

Die erfindungsgemäßen Übergangsmetallkomplexe und Katalysatoren eignen sich insbesondere für den Einsatz in einem Verfahren zur übergangsmetallkatalysierten Herstellung von enantiomerenangereicherten Verbindungen und für C=C-Doppelbindungsisomerisierungen, das von der Erfindung ebenfalls umfasst ist

Dabei können sowohl isolierte Übergangsmetallkomplexe wie zum Beispiel solche der Formeln (VIIIa-c) und (IXa-e) als auch in situ hergestellte Übergangsmetallkomplexe eingesetzt werden, wobei letztere bevorzugt sind.

Bevorzugt werden die Übergangsmetallkomplexe und Katalysatoren für asymmetrische Hydrogenierungen eingesetzt. Bevorzugte asymmetrische Hydrogenierungen sind beispielsweise Hydrogenierungen von prochiralen G=C-Bindungen wie zum Beispiel prochirale Enamine, Olefine, Enolether, C=O-Bindungen wie zum Beispiel prochirale Ketone und C=N-Bindungen wie zum Beispiel prochirale Imine. Besonders bevorzugte asymmetrische Hydrogenierungen sind Hydrogenierungen von prochiralen Ketonen wie insbesondere alpha- und beta-Ketoestern wie beispielsweise Chloracetessigsäuremethyl- oder ethylester sowie Acetessigsäuremethyl- oder ethylester.

Die Menge der eingesetzten Übergangsmetallverbindung oder des eingesetzten Übergangsmetallkomplexes kann dabei beispielsweise 0.001 bis 5 mol-%, bezogen auf das eingesetzte Substrat betragen, bevorzugt sind 0.01 bis 2 mol-%.

Die erfingdungsgemäß herstellbaren enantiomerenangereicherten Verbindungen eignen sich insbesondere zur Herstellung von Agrochemikalien, Pharmazeutika oder Zwischenprodukten davon.

Der Vorteil vorliegender Erfindung ist, dass mit Hilfe der erfindungsgemäßen Katalysatoren Enantioselektivitäten und Aktivitäten erreicht werden, die bislang mit ähnlichen Katalysatoren nicht erzielbar waren.

### Beispiele

### Referenz-Beispiel 1

### Herstellung von (S)-[5,5'-Dichlor-6,6'-dihydroxybiphenyl-2,2'-diyl]-bis(diphenyl-phosphinoxid)

In eine Lösung von 8 g (S)-[5,5'-Dichlor-6,6'-dimethoxybiphenyl-2,2'-diyl]bis(diphenyl-phosphin-oxid) in 160 ml über CaH₂ getrocknetem Methylenchlorid, die in einem Rührgefäß unter Feuchtigkeitsausschluss auf -78°C gekühlt wurde, tropfte man 3,4 ml BBr₃ (= 8,77 g) unter Rühren ein und hielt die Reaktionsmischung 1 Stunde bei dieser Temperatur. Dann ließ man die Temperatur innerhalb von 2 Stunden auf Raumtemperatur ansteigen und rührte bei dieser Temperatur weitere 24 Stunden. Unter Eiskühlung wurden anschließend unter guter Durchmischung innerhalb 1 Stunde insgesamt 50 ml Wasser zugetropft, danach wurde das Methylenchlorid abdestilliert und nach Zugabe von weiteren 110 ml Wasser 6 Stunden unter Rühren bei 80°C gehalten. Nach dem Abfühlen auf RT wurde der entstandene Niederschlag über eine Glasfilterfritte abgesaugt, mit 100 ml Wasser und danach mit 200 ml Methylenchlorid unter intensiver Durchrnischung ausgewaschen. Nach dem trocknen des verbleibenden Produktes erhielt man 6,3 g (= 82 % d.Th.) reines (S)-[5,5'-Dichlor-6,6'-dihydroxybiphenyl-2,2'-diyl]bis(diphenyl-phosphinoxid), Fp. 236 - 237°C.

Man erhält neben 38 mg des eingesetzten Zwischenproduktes 123 mg (S)-cis-Verbindung der oben angegebenen Formel.
Fp. 126°C - 128°C, [a]_{D} = + 57,6° (c =1,0, CHCl₃) und
118 mg der (S)-trans-Verbindung der oben angegebenen Formel.
Fp. 141°C -142°C, [a]_{D} = - 48,4° (c =1,4, CHCl₃).

### Beispiel 2

### Herstellung von cis- und trans-(S)-[5,5'-Dichlor-6,6'-(1,4-but-2-en-dioxy)biphenyl-2,2'-diyl]-bis(diphenyl-phosphinoxid)

Eine Mischung von 0,50 g (0,76 mmol) (S)-[5,5'-Dichlor-6,6'-dihydroxybiphenyl-2,2'-diyl]bis(di-phenyl-phosphinoxid) und von 0,42 g (3,04 mmol) Kaliumcarbonat in 10 ml DMF wird 30 Minuten bei Raumtemperatur intensiv gerührt. Unter weiterem intensiven Rühren werden 0,223 g (3,04 mmol) Allylchlorid hinzugegeben und diese Mischung 26 Stunden bei 40°C gehalten. Anschließend wird das Reaktionsgemisch analog der in Beispiel 1 angegebenen Verfahrensweise aufgearbeitet. Man erhält neben 0,136 g des eingesetzten Dichlordihydroxbiphenylphosphinoxids und 58 mg einer Mischfraktion aus Monoallyloxy- und Bisallyloxy-dichlorbisphenylbisphosphinoxid 0,395 g reines (S)-[6,6'-Bisallyloxy-5,5'-dichlorbiphenyl-2,2'-diyl]bis(diphenyl-phosphin-oxid).
Fp. 214°C - 215°C (Z.), [a]_{D} = - 56,8° (c = 1,0, CHCl₃).

Zu einer Lösung von 18 mg Grubbs Katalysator, 1. Generation, in 40 ml trockenem CH₂Cl₂ werden unter Rühren während einer Stunde bei Raumtemperatur und unter Argonatmosphäre 295 mg des oben beschriebenen Zwischenproduktes, gelöst in 40 ml CH₂Cl₂ zugetropft. Danach wird die Mischung 5 Stunden bei 40°C unter Rückfluss und über 24 Stunden bei Raumtemperatur gehalten. Anschließend wird durch Rühren unter Luft, (1 Stunde), der Katalysator zerstört und das erhaltene Produktgemisch über Kieselgel filtriert und das Rohprodukt analog der Verfahrensweise in Beispiel 1 chromatographisch aufgetrennt.

### Referenz-Beispiel 3

### Herstellung von (R)-(1,4-But-2-endioxy)biphenyl-2,2'-diyl]-bis(diphenyl-phosphinoxid)

Eine Mischung von 4,1 g (6,99 mmol) (R)-(6,6'-Dihydroxybiphenyl-2,2'-diyl)bis(diphenylphosphinoxid) und 3,85 g (27,96 mmol) Kaliumcarbonat in 50 ml Dimethylformamid werden 1 Stunde intensiv bei Raumtemperatur gerührt. Danach werden zu der weiter intensiv gerührten Mischung 0,96 g (7,69 mmol) cis-1,1-Dichlor-but-2-en gelöst in 5,0 ml DMF zugetropft und die Mischung weitere 12 Stunden bei RT und 8 Stunden bei 80°C gerührt. Nach dem Erkalten wird das Reaktionsgemisch filtriert.

Aus dem abfiltrierten Niederschlag erhält man nach Ansäuern mit 2N Salzsäure 0,71 g des eingesetzten Dihydroxybisphenylbisphosphinoxids unverändert in reiner Form zurück.

Das Filtrat wird bei 0,5 mbar unter Erwärmen auf 60°C sorgfältig zur Trockene gebracht und anschließend in 60 ml trockenem Dichlormethan gelöst. Nach 12 Stunden wird unter Zusatz von Kieselgel als Filtrierhilfsmittel diese Lösung filtriert. Aus dem abfiltrierten Festprodukt werden weitere 0,13 g des eingesetzten Bisphosphinoxides zurückgewonnen.

Das Filtrat wird eingedampft, man erhält 3,41 g eines Rohproduktes, das durch Chromatographie aufgetrennt wird, (Kieselgel Merck Typ 9385, Eluent: Ethylacetat/Methanol/Wasser, 500:50:5). Man erhält 2,76 g reines Produkte der oben angegebenen Formel.
Fp. 116°C - 118°C, [a]_{D} = - 161,1° (c = 1,0, CHCl₃).

### Referenz-Beispiel 4

### Analog zu Referenz-Beispiel 3 wird (S)-cis-[6,6'-(1,6-hex-3-endioxy)biphenyl-2,2'-diyl']-bis(diphenyl-phosphinoxid)

Fp. 234°C - 235°C, [a]_{D} = - 99° (c = 0,5, EtOH).

### Referenz-Beispiel 5

### Analog zu Referenz-Beispiel 3 wird (R)-trans-[6,6'-(1,4-but-2-endioxy)biphenyl-2,2'-diyl']-bis(diphenyl-phosphinoxid)

Fp. 192°C - 194°C (Z), [a]_{D} = + 86,8° (c = 0,5, CHCl₃).

### Referenz-Beispiel 6

### Herstellung von (R)-cis-[6,6'-(1,4-But-2-endioxy)biphenyl-2,2'-diyl]-bis(diphenyl)-phosphin

Das Phosphinoxid aus Beispiel 3 (0,686 g, 1 mmol) wurde mit Xylol (18 ml) unter Argon vorgelegt, die resultierende Mischung zunächst mit Tri-(n-butyl)amin (3,5 ml, 15 mmol) und Trichlorsilan (1,5 ml, 15 mmol) versetzt und dann für 2 Stunden unter Rückfluss erhitzt. Es wurde abkühlen gelassen, mit entgaster NaOH-Lösung (30%, 15 ml) kurz nachgerührt, 25 ml entgastes Wasser zugegeben und die Phasen getrennt. Die wässrige Phase wurde 3 mal mit Methyl-tert.-butylether (10 ml) extrahiert und die vereinigten organischen Phasen zunächst mit ges. Kochsalzlösung gewaschen und dann über MgSO₄ getrocknet. Das organische Lösungsmittel wurde im Vakuum entfernt und man erhielt das Produkt als farbloses Pulver.
Ausbeute: 95 % d.Th.

### Referenz-Beispiel 7

### Herstellung von (S)-cis-[6,6'-(1,4-Hex-3-endioxy)biphenyl-2,2'-diyl]-bis(diphenyl)-phosphin

Das Phosphinoxid aus Referenz-Beispiel 4 wurde völlig analog zu Referenz-Beispiel 6 reduziert und in einer Ausbeute von 91 % erhalten.

### Beispiel 8

### Herstellung von (S)-cis-[5,5'-Dichlor-6,6'-(1,4-but-2-endioxy)biphenyl-2,2'-diyl]-bis(diphenyl)-phosphin

Das Phosphinoxid aus Beispiel 2 wurde völlig analog zu Beispiel 6 reduziert und in einer Ausbeute von 94 % erhalten.

### Enantioselektive Hydrierung von Acetessigsäuremethylester (S1)

### Vergleichsbeispiel 9

(S)-cis-[6,6'-(1,4-Hex-3-endioxy)biphenyl-2,2'-diyl]-bis(diphenyl)-phosphin (4,4 mg, 2 mol %), RuCl₃ (1,4 mg, 1 mol-%) und 75 mg **S1** wurden in Methanol (1,3 ml) vorgelegt und die Mischung unter einem Wasserstoffdruck von 10 bar für 23 h auf 50°C erhitzt. Nach dieser Zeit wurde eine Enantiomerenreinheit des Produktes von 97,3 % ee ermittelt

### Vergleichsbeispiel 10

(R)-cis-[6,6'-(1,4-But-2-endioxy)biphenyl-2,2'-diyl]-bis(diphenyl)-phosphin (4,4 mg, 2 mol %), RuCl₃ (1,4 mg, 1 mol-%) und 75 mg **S1** wurden in Methanol (1,3 ml) vorgelegt und die Mischung unter einem Wasserstoffdruck von 10 bar für 23 h auf 50°C erhitzt. Nach dieser Zeit wurde eine Enantiomerenreinheit des Produktes von 98,6 % ee ermittelt

### Beispiel 11

(S)-eis-[5,5'-Dichlor-6,6'-(1,4-but-2-endioxy)biphenyl-2,2'-diyl]-bis(diphenyl)-phosphin (4,4 mg, 2 mol %), RuCl₃ (1,4 mg, 1 mol-%) und 75 mg **S1** wurden in Methanol (1,3 ml) vorgelegt und die Mischung unter einem Wasserstoffdruck von 10 bar für 5 h auf 50°C erhitzt Nach dieser Zeit wurde eine Enantiomerenreinheit des Produktes von 98,3 % ee ermittelt

### Beispiel 12 (zum Vergleich)

(S)-[5,5'-Dichlor-6,6'-dimethoxy-biphenyl-2,2'-diyl]-bis(diphenyl)-phosphin (4,4 mg, 2 mol %), RuCl₃ (1,4 mg, 1 mol-%) und 75 mg **S1** wurden in Methanol (1,3 ml) vorgelegt und die Mischung unter einem Wasserstoffdruck von 10 bar für 23 h auf 50°C erhitzt. Nach dieser Zeit wurde eine Enantiomerenreinheit des Produktes von 96,4 % ee ermittelt

### Beispiel 13

### Herstellung von (S)-[5,5'-Dichlor-6,6'-(1,3-propandioxy)biphenyl-2,2'-diyl]-bis(diphenyl-phosphinoxid)

Zu einer unter Verwendung eines Intensivrührers effektiv durchmischten Lösung bzw. Suspension von 5,0 g (S)-[5,5'-Dichlor-6,6'-dihydroxybiphenyl-2,2'-diyl]bis(diphenyl-phosphinoxid) und von 4,2 g Kaliumcarbonat in 75 ml DMF wurden bei 22°C 1,69 g 1,3 Dibrompropan zugegeben. Danach wurde das Reaktionsgemisch weitere 72 Stunden bei Raumtemperatur gerührt und anschließend filtriert. Aus dem Filtrat wurde durch Vakuumdestillation das Lösungsmittel entfernt. Das als Nebenprodukt entstandene (S)-[5,5'-Dichlor-6,6'-bis(3-brompropoxy)biphenyl-2,2'-diyl]bis(diphenyl-phosphinoxid) (0,34 g) wurde chromatographisch abgetrennt, (Kieselgel Merck Typ 9385, Eluent: Ethylacetat/Hexan/Methanol, 10:1:1). Das Hauptprodukt erhielt nach dieser Chromatographie noch als Verunreinigung eine geringe Menge des eingesetzten Substrates. Zur Entfernung dieser Verunreinigungen wurde dieses Produkt in 40 ml DMF gelöst, 160 mg Kaliumcarbonat und 0,15 ml Bromessigsäuremethylester hinzugefügt und das Gemisch über Nacht bei Raumtemperatur gerührt. Nach Filtration und Entfernung des Lösungsmittels durch Abdampfen im Vakuum wurde das erhaltene Produkt unter den gleichen Bedingungen wie zuvor angegeben chromatographisch aufgetrennt. Man erhielt 4,0 g reines Produkt der oben angegebenen Formel.
Fp. 135° - 137°C [a]_{D} = + 151,3° (c = 1,0, CHCl₃).

### Beispiel 14

### Herstellung von (S)-[5,5'-Dichlor-6,6'-(1,4-butandioxy)biphenyl-2,2'-diyl]-bis(diphenyl-phosphinoxid)

Zu einer unter Verwendung eines Intensivrührers effektiv durchmischten Lösung bzw. Suspension von 1,0 g (S)-[5,5'-Dichlor-6,6'-dihydroxybiphenyl-2,2'-diyl]bis(diphenyl-phosphinoxid) und von 0,84 g Kaliumcarbonat in 25 ml DMF wurden bei 22°C 0,329 g 1,4-Dibrombutan zugegeben. Danach wurde das Reaktionsgemisch zunächst 12 Stunden bei Raumtemperatur und anschließend weitere 36 Stunden bei 80°C gerührt. Anschließend wurde das erhaltene Produktgemisch filtriert und aus dem Filtrat durch Vakuumdestillation das Lösungsmittel entfernt.

Das so erhaltene Produkt wurde chromatographisch aufgetrennt, (Kieselgel Merck Typ 9385, Eluent: Ethylacetat/Hexan/Methanol, 75:1,5:1,0). Man erhielt 0,67 g reines Produkt der oben der oben angegebenen Formel.
Fp. 138° - 140°C [a]_{D} = + 15,2° (c = 1,0, CHCl₃).

### Beispiel 15

### Herstellung der Stereoisomeren von (S)-[5,5'-Dichlor-6,6'-(1,3-butandioxy)biphenyl-2,2'-diyl]-bis(diphenyl-phosphinoxid)

Eine Lösung bzw. Suspension von 250 mg (S)-[5,5'-Dichlor-6,6'-dihydroxybiphenyl-2,2'-diyl]-bis(diphenyl-phosphinoxid) und von 210 mg Kaliumcarbonat sowie von 90 mg racemischen 1,3-Dibrombutan in 5,0 ml DMF wurden 12 Stunden bei Raumtemperatur und anschließend 10 Stunden bei 80°C intensiv gerührt. Danach wurde das Reaktionsgemisch filtriert und das erhaltene Filtrat bis zur Trockne im Vakuum eingeengt. Aus dem erhaltenen Rohprodukt wurden durch Chromatographie zwei reine Diasteromere, die jeweils der oben angegebenen Formel entsprechen, in reiner Form isoliert, (Kieselgel Merck Typ 9385, Eluent: Ethylacetat/Hexan/Methanol, 75,0:1,5:1,0).
Diasteromer 4A, (64 mg):
Fp. 132° - 135°C [a]_{D} = + 62,4° (c = 1,0, CHCl₃).
Diasteromer 4B, (42 mg):
Fp. 118° - 119°C [a]_{D} = + 137,7° (c = 1,0, CHCl₃).

### Beispiel 16

### Herstellung von (S)-[5,5'-Dichlor-6,6'-(1,4-butandioxy)biphenyl-2,2'-diyl]-bis(diphenyl)-phosphin

Das Phosphinoxid aus Beispiel 14 (0,687 g, 1 mmol) wurde mit Xylol (18 ml) unter Argon vorgelegt, die resultierende Mischung zunächst mit Tri-(n-butyl)amin (3,5 ml, 15 mmol) und Trichlorsilan (1,5 ml, 15 mmol) versetzt und dann für 2 stunden unter Rückfluss erhitzt. Es wurde abkühlen gelassen, mit entgaster NaOH-Lösüng (30%, 14 ml) kurz nachgerührt, 20 ml entgastes Wasser zugegeben und die Phasen getrennt. Die wässrige Phase wurde 4 mal mit Methyl-tert.-butylether (MTBE) extrahiert und die vereinigten organischen Phasen zunächst mit ges. Kochsalzlösung gewaschen und anschließend über MgSO₄ getrocknet Das organische Lösungsmittel wurde im Vakuum entfernt und man erhielt das Produkt als farbloses Pulver.
Ausbeute: 97 % d.Th.
³¹P-NMR (161.9 MHz, CDCl₃): - 13.61 ppm.

### Beispiel 17

### Herstellung von (S)-[5,5'-Dichlor-6,6'-(1,3-propandioxy)biphenyl-2,2'-diyl]-bis(diphenyl)-phosphin

Exakt analog zu Beispiel 16 wurde das Produkt in 98 % Ausbeute erhalten.
³¹P-NMR (161.9 MHz, CDCl₃): - 10.91 ppm.

### Enantioselektive Hydrierungen von Chloracetessigsäureethylester (S2) und Acetessigsäuremethylester (S3)

### Beispiel 18

(S)-[5,5'-Dichlor-6,6'-(1,3-propandioxy)biphenyl-2,2'-diyl]-bis(diphenyl)-phosphin (3,2 mg, 0,02 mol %), [(p-Cumol)RuCl]₂ (1,5 mg, 0,01 mol-%) und 4 g S2 wurden in Ethanol (10ml) vorgelegt und die Mischung unter einem Wasserstoffdruck von 90 bar für 1 h auf 80°C erhitzt. Nach dieser Zeit wurde eine Enantiomerenreinheit des Produktes von 96,5 % ee ermittelt.

### Beispiel 19 (zum Vergleich)

(S)-[5,5'-Dichlor-6,6'-dimethoxy-biphenyl-2,2'-diyl]-bis(diphenyl)-phosphin (3,2 mg, 0,02 mol %), [(p-Cumol)RuCl]₂ (1,5 mg, 0,01 mol-%) und 4 g **S2** wurden in Ethanol (10ml) vorgelegt und die Mischung unter einem Wasserstoffdruck von 90 bar für 1 h auf 80°C erhitzt. Nach dieser Zeit wurde eine Enantiomerenreinheit des Produktes von 95,1 % ee ermittelt.

### Beispiel 20

(S)-[5,5'-Dichlor-6,6'-(1,4-butandioxy)biphenyl-2,2'-diyl]-bis(diphenyl)-phosphin (4,4 mg, 2 mol %), RuCl₃ (1,4 mg, 1 mol-%) und 75 mg **S3** wurden in Methanol (1,3 ml) vorgelegt und die Mischung unter einem Wasserstoffdruck von 10 bar für 5 h auf 50°C erhitzt Nach dieser Zeit wurde eine Enantiomerenreinheit des Produktes von 97,1 % ee ermittelt

### Beispiel 21 (zum Vergleich)

(S)-[5,5'-Dichlor-6,6'-dimethoxy-biphenyl-2,2'-diyl]-bis(diphenyl)-phosphin (4,4 mg, 2 mol %), RuCl₃ (1,4 mg, 1 mol-%) und 75 mg **S3** wurden in Methanol (1,3 ml) vorgelegt und die Mischung unter einem Wasserstoffdruck von 10 bar für 5 h auf 50°C erhitzt. Nach dieser Zeit wurde eine Enantiomerenreinheit des Produktes von 96,4 % ee ermittelt.

## Patentansprüche

1. Verbindungen der Formel (I), 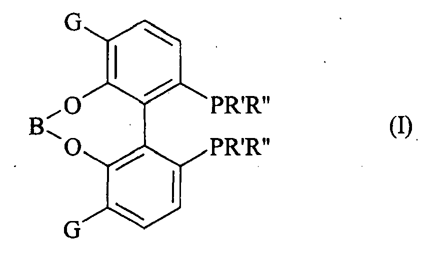 in der B für eine bivalente Gruppierung der Formel-(CHR¹)ₙ-(R²C=CR³)-(CHR⁴)ₘ steht, wobei R¹, R², R³ und R⁴ jeweils unabhängig voneinander für Wasserstoff oder Alkyl, und n und m jeweils unabhängig voneinander für null oder eine ganze Zahl von 1 bis 8 stehen, wobei jedoch die Summe aus n und m 1 bis 8 beträgt und in der weiterhin G für Chlor und
R' und R" jeweils unabhängig voneinander für Aryl oder Alkyl stehen oder
in der B für eine bivalente Gruppierung der Formel -(CHR¹)ₙ-(CR²R³)ₘ-(CHR⁴)ₒ steht, wobei R¹, R², R³ und R⁴ jeweils unabhängig voneinander für Wasserstoff oder Alkyl, vorzugsweise für C₁-C₆-Alkyl stehen, und n, m und o jeweils unabhängig voneinander für null oder eine ganze Zahl von 1 bis 8 stehen, wobei jedoch die Summe aus n, m und o 1 bis 8, vorzugsweise 3 oder 4, beträgt, und in der weiterhin
G für Chlor und
R' und R" jeweils unabhängig voneinander für Aryl oder Alkyl stehen, wobei Alkyl jeweils für unverzweigte, verzweigte, cyclische oder acyclische C₁-C₁₂ Alkylreste steht, die entweder nicht oder zumindest teilweise durch Fluor, Chlor oder Aryl oder C₁-C₆-Alkoxy substituiert sein können, steht,
Aryl jeweils für carbocyclische aromatische Reste mit 6 bis 18 Gerüstkohlenstoffatomen oder heteroaromatische Reste mit 5 bis 18 Gerüstkohlenstoffatomen steht, in denen keines, ein, zwei oder drei Gerüstkohlenstoffatome pro Cyclus ausgewählt aus der Gruppe Stickstoff, Schwefel oder Sauerstoff substituiert sein können, und worin die carbocyclischen aromatischen oder heteroaromatischen Reste mit bis zu fünf gleichen oder verschiedenen Substituenten ausgewählt aus der Gruppe freies oder geschütztes Hydroxy, Iod, Brom, Chlor, Fluor, Cyano, freies oder geschütztes Formyl, C₁-C₁₂-Alkyl, C₆-C₁₂-Aryl, C₁-C₆-Alkoxy und Tri(C1-C6-alkyl)-siloxyl substituiert sein können.

2. Verbindungen nach Anspruch 1, **dadurch gekennzeichnet, dass** R¹, R², R³ und R⁴ jeweils unabhängig voneinander für Wasserstoff, Methyl, Ethyl, n-Propyl, iso-Propyl, n-Butyl und n-Pentyl stehen.

3. Verbindungen nach mindestens einem der Ansprüche 1 und 2, **dadurch gekennzeichnet, dass** R' und R" jeweils unabhängig voneinander für C₃-C₈-Alkyl oder C₅-C₁₀-Aryl stehen, das nicht, einfach oder mehrfach mit Resten substituiert sind, die ausgewählt sind aus der Gruppe Chlor, Fluor, Cyano, Phenyl, C₁-C₆-Alkoxy und C₁-C₆-Alkyl.

4. Verbindungen nach mindestens einem der Ansprüche 1 und 3, **dadurch gekennzeichnet, dass** es folgende sind:
(R)- und (S)-[5,5'-Dichlor-6,6'- (cis-1,4-but-2-endioxy) -biphenyl-2,2'-diyl]-bis-[(diphenyl)-phosphin, (R)- und (S)-[5,5'-Dichlor-6,6'-(cis-1,4-but-2-endioxy)-biphenyl-2, 2'-diyl]-bis-[(di-cyclohexyl)phosphin, (R)- und (S)-[5,5'-Dichlor-6,6'-(cis-1,4-but-2-endioxy)-biphe-nyl-2,2'-diyl]-bis-[(di-3,5-di-tert.-butyl-4-methoxyphenyl)phosphin, (R)-und (S)-[5,5'-Dichlor-6,6'-(cis-1,4-but-2-endioxy)-biphenyl-2,2'-diyl]-bis-[(di-3,5-dimethylphenyl) phosphin, (R)- und (S)-[5,5'-Dichlor-6,6'-(cis-1, 4-but-2-endioxy)-biphenyl-2,2'-diyl]-bis-[(di-3,5-dimethyl-4-methoxyphenyl)phosphin, (R)- und (S)-[5,5'-Dichlor-6,6'-(cis-1,4-but-2-endioxy)-biphenyl-2,2'-diyl]-bis-[(di-4-fluorphenyl)phosphin sowie (R)- und (S)-[5,5'-Dichlor-6,6'-(cis-1,4-but-2-endioxy)-biphenyl-2,2'-diyl]-bis-[(di-3,5-di-tert.-butylphenyl)-phosphin sowie die entsprechenden trans-Verbindungen, (R)- und (S)-[5, 5'-Dichlor-6, 6'-(1,3-propandioxy)-biphenyl-2,2'-diyl]-bis-[(di-phenyl)phosphin, (R)- und (S)-[5,5'-Dichlor-6,6'-(1,3-propandioxy)-biphenyl-2,2'-diyl]-bis-[(dicyclohexyl)phosphin, (R)- und (S)-[5,5'-Dichlor-6,6'-(1,3-propandioxy)-biphenyl-2,2'-diyl]-bis-[(di-3,5-di-tert.-butyl-4-methoxyphenyl)phosphin, (R)- und (S)-[5,5'-Dichlor-6,6'- (1,3-propandioxy)-biphenyl-2,'-diyl]-bis-[(di-3,5-dimethylphenyl)phosphin, (R)- und (S)-[5,5'-Dichlor-6,6'-(1,3-propandioxy)-biphenyl-2,2'-diyl]-bis-[(di-3,5-dimethyl-4-methoxyphenyl)phosphin, (R)- und (S)-[5,5'-Dichlor-6,6'-(1,3-propandioxy)-biphenyl-2,2'-diyl]-bis-[(di-4-fluorphenyl)phosphin sowie (R)- und (S)-[5,5'-Dichlor-6,6'-(1,3-propandioxy)-biphenyl-2,2'-diyl]-bis-[(di-3,5-di-tert.-butylphenyl)phosphin, die stereoisomeren (R)- und (S)-[5,5'-Dichlor-6,6'- (1,3-butandioxy) biphenyl-2,2'-diyl]-bis(diphenylphosphine], die stereoisomeren (R)- und (S)-[5,5'-Dichlor-6,6'-(1,3-butandioxy)biphenyl-2,2'-diyl]-bis(diphenylphosphine) sowie beliebige Mischungen der Enantiomeren.

5. Verfahren zur Herstellung von Verbindungen der Formel (IV) 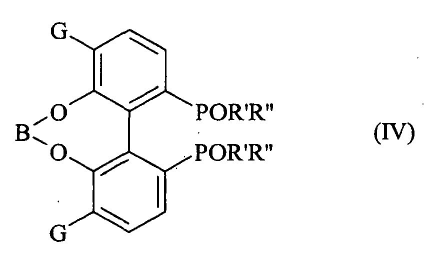 in der B, G, R' und R" die in Anspruch 1 genannte Bedeutung besitzen, **dadurch gekennzeichnet, dass** Verbindungen der Formel (III) 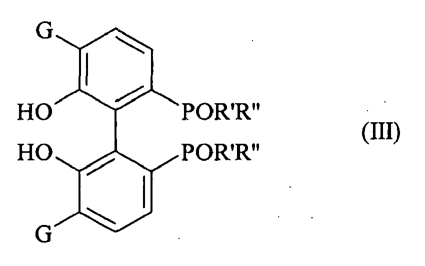 mit einer Verbindung der Formel (VIa) oder (VIb) oder sukzessive mit zwei verschiedenen Verbindungen der Formeln (VIa) und (VIb)
X³-(CHR¹)ₙ-(R²C=CHR⁵) (VIa)
X⁴-(CHR⁴)ₘ(R³C=CHR⁶) (VIb)
in denen X³ und X⁴ jeweils für Chlor, Brom, Iod oder ein Sulfonat stehen und
R¹, R², R³ und R⁴ die in Anspruch 1 genannte Bedeutung besitzen und
R⁵ und R⁶ jeweils unabhängig voneinander für Wasserstoff oder C₁-C₄-Alkyl stehen zu Verbindungen der Formel (VII) umgesetzt werden 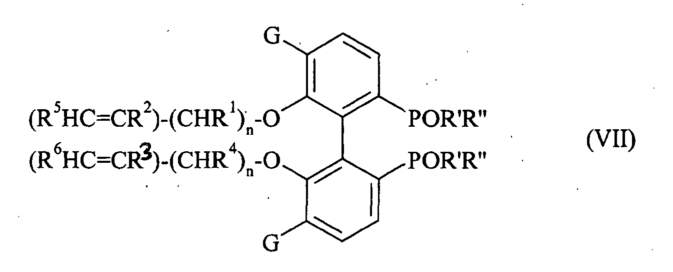 und die Verbindungen der Formel (VII) dann in Gegenwart eines Olefin-Metathesekatalysators in Verbindungen der Formel (IV) überführt werden.

6. Verfahren nach Anspruch 5, **dadurch gekennzeichnet, dass** die Verbindungen der Formel (VII) anschließend zu Verbindungen der Formel (I) gemäß Anspruch 1 reduziert werden.

7. Verbindungen der Formel (VII) 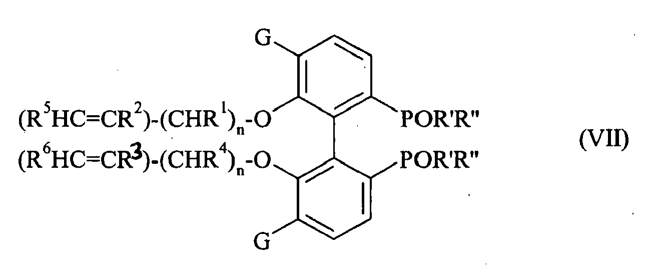 in der G, R¹, R², R³, R⁴, R' und R" die in Anspruch 1 genannte Bedeutung besitzen und R⁵ und R⁶ jeweils unabhängig voneinander für Wasserstoff oder C₁-C₄-Alkyl stehen.

8. Verbindungen nach Anspruch 7, **dadurch gekennzeichnet, dass** es folgende sind:
(R)- und (S)-[5,5'-Dichlor-6,6'-(bis-allyloxy)-biphenyl-2,2'-diyl]-bis-[(dicyclohexyl)phosphinoxid, (R)- und (S)-[5,5'-Dichlor-6,6'-(bis-allyloxy)-biphenyl-2,2'-diyl]-bis-[(di-3,5-di-tert.-butyl-4-methoxyphenyl)phosphinoxid, (R)- und (S)-[5,5'-Dichlor-6,6'-(bis-allyloxy)-biphenyl-2,2'-diyl]-bis-[(di-3,5-dimethylphenyl)phosphinoxid, (R)- und (S)-[5,5'-Dichlor-6,6'-(bis-allyloxy)-biphenyl-2,2'-diyl]-bis-[(di-3,5-dimethyl-4-methoxyphenyl)phosphin-oxid, (R)- und (S)-[5,5'-Dichlor-6,6'-(bis-allyloxy)-biphenyl-2,2'-diyl]-bis-[(di-4-fluor-phenyl)phosphinoxid sowie (R)- und (S)-[5,5'-Dichlor-6,6'-(bis-allyloxy)-biphenyl-2,2'-diyl]-bis-[(di-3,5-di-tert.-butylphenyl)phosphinoxid.

9. Verbindungen der Formel (IV) 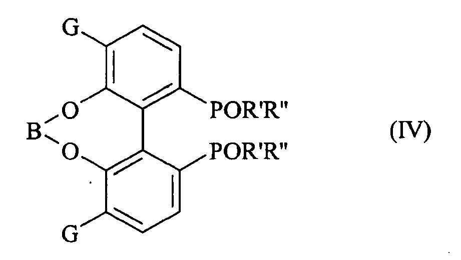 in der B, G, R' und R" die in Anspruch 1 genannte Bedeutung besitzen.

10. Verbindungen nach Anspruch 9, **dadurch gekennzeichnet, dass** es folgende sind:
(R)- und (S)-[5,5'-Dichlor-6,6'-(cis-1,4-but-2-en-dioxy)-biphenyl-2,2'-diyl]-bis-[(di-cyclo-hexyl)phosphinoxid, (R) -und (S)-[5,5'-Dichlor-6,6'-(cis-1,4-but-2-en-dioxy)-biphenyl-2,2'-diyl]-bis-[(di-3,5-di-tert.-butyl-4-methoxyphenyl) phosphinoxid, (R)- und (S)-[5,5'-Dichlor-6,6'-(cis-1,4-but-2-en-dioxy)-biphenyl-2,2'-diyl]-bis-[(di-3,5-dimethylphenyl)phosphinoxid, (R)- und (S)-[5,5'-Dichlor-6,6'-(cis-1,4-but-2-endioxy)-biphenyl-2,2'-diyl]-bis-[(di-3,5-dimethyl-4-methoxyphenyl)phosphinoxid, (R)- und (S)-[5,5'-Dichlor-6,6'-(cis-1,4-but-2-endioxy)-biphenyl-2,2'-diyl]-bis-[(di-4-fluorphenyl)phosphinoxid sowie (R)- und (S)-[5,5'-Dichlor-6,6'-(cis-1,4-but-2-endioxy)-biphenyl-2,2'-diyl]-bis-[(di-3,5-di-tert.-butyl-phenyl)phosphinoxid sowie die jeweiligen trans-Verbindungen sowie (R)- und (S)-[5,5'-Dichlor-6,6'-(1,3-propandioxy)-biphenyl-2,2'-diyl]-bis-[(dicyclohexyl) phosphinoxid, (R)- und (S)-[5,5'-Dichlor-6,6'-(1,3-propandioxy)-biphenyl-2,2'-diyl]-bis-[(di-3,5-di-tert.-butyl-4-methoxyphenyl)phosphinoxid, (R)- und (S)-[5,5'-Dichlor-6,6'-(1,3-propandioxy)-biphenyl-2,2'-diyl]-bis-[(di-3,5-dimethylphenyl)phosphinoxid, (R)- und (S)-[5,5'-Dichlor-6,6'-(1,3-propandioxy)-biphenyl-2,2'-diyl]-bis-[(di-3,5-dimethyl-4-methoxyphenyl)phosphinoxid, (R)- und (S)-[5,5'-Dichlor-6,6'-(1,3-propandioxy)-biphenyl-2,2'-diyl]-bis-[(di-4-fluorphenyl)phosphinoxid sowie (R)- und (S)-[5,5'-Dichlor-6,6'-(1,3-propandioxy)-biphenyl-2,2'-diyl]-bis-[(di-3,5-di-tert.-butylphenyl)phosphinoxid, die stereoisomeren (R)- [5,5'-Dichlor-6,6'- (1,3-butandioxy)biphenyl-2,2'-diyl]-bis (diphenylphosphinoxide), die stereoisomeren (S)- [5,5'-Dichlor-6,6'-(1, 3-butandioxy)biphenyl-2,2'-diyl]-bis(diphenylphosphinoxide) sowie beliebige Mischungen der Enantiomeren.

11. Verbindungen der Formel (III) 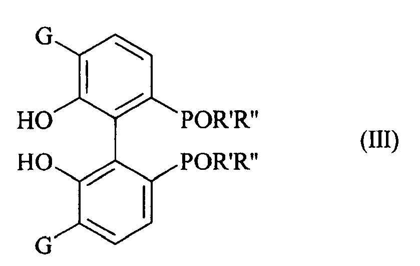 in der G, R' und R" die in Anspruch 1 genannte Bedeutung besitzen.

12. Verbindung nach Anspruch 11, **dadurch gekennzeichnet, dass** es folgende ist: ((S)-[5,5'-Dichlor-6,6'-dihydroxybiphenyl-2,2'-diyl]-bis(diphenylphosphinoxide).

13. Übergangsmetallkomplexe enthaltend Verbindungen nach einem oder mehreren der Ansprüche 1 bis 4.

14. Katalysatoren enthaltend Übergangsmetallkomplexe nach Anspruch 13.

15. Verfahren zur übergangsmetallkatalysierten Herstellung von enantiomerenangereicherten Verbindungen, **dadurch gekennzeichnet, dass** es in Gegenwart von Katalysatoren gemäß Anspruch 14 durchgeführt wird.

16. Verwendung der Katalysatoren nach Anspruch 14 zur asymmetrischen Hydrogenierung von prochiralen C=C-Bindungen, C=O-Bindungen oder C=N-Bindungen.

17. Verwendung der Katalysatoren nach Anspruch 14 zur asymmetrischen Hydrogenierung von prochiralen Ketonen.

## Claims

1. Compounds of Formula (I), 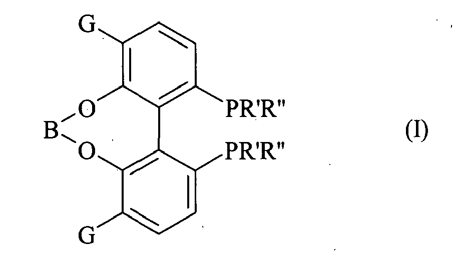 in which B represents a bivalent group of the formula -(CHR¹)ₙ-(R²C=CR³)-(CHR⁴)ₘ, wherein R¹, R², R³ and R⁴ each independently represents hydrogen or alkyl, and n and m each independently represents zero or an integer from 1 to 8, but wherein the sum of n and m is from 1 to 8 and in which furthermore
G represents chlorine and
R' and R" each independently represents aryl or alkyl or
in which B represents a bivalent group of the formula -(CHR¹)ₙ-(CR²R³)ₘ-(CHR⁴)ₒ, wherein R¹, R², R³ and R⁴ each independently represents hydrogen or alkyl, preferably C₁-C₆-alkyl, and n, m and o each independently represents zero or an integer between 1 and 8, but wherein the sum of n, m and o is 1 to 8, preferably 3 or 4, and in which furthermore
G represents chlorine and
R' and R" each independently represents aryl or alkyl, wherein
alkyl in each case represents unbranched, branched, cyclic or acyclic C₁-C₁₂ alkyl radicals, which may be unsubstituted or at least partially substituted with fluorine, chlorine or aryl or C₁-C₆-alkoxy,
aryl in each case represents carbocyclic aromatic radicals with 6 to 18 backbone carbon atoms or heteroaromatic radicals with 5 to 18 backbone carbon atoms, in which no, one, two or three backbone carbon atoms per ring may be substituted with a substituentselected from the group of nitrogen, sulfur or oxygen, and in which the carbocyclic aromatic or heteroaromatic radicals may be substituted with up to five substituents, the same or different, selected from the group of free or protected hydroxy, iodine, bromine, chlorine, fluorine, cyano, free or protected formyl, C₁-C₁₂-alkyl, C₆-C₁₂-aryl, C₁-C₆-alkoxy and tri(C1-C6-alkyl)-siloxyl.

2. Compounds according to Claim 1, **characterized in that** R¹, R², R³ and R⁴ each independently represents hydrogen, methyl, ethyl, n-propyl, isopropyl, n-butyl and n-pentyl.

3. Compounds according to at least one of Claims 1 and 2, **characterized in that** R' and R" each independently represents C₃-C₈-alkyl or C₅-C₁₀-aryl, which may be unsubstituted, singly substituted, or multiply substituted with radicals selected from the group of chlorine, fluorine, cyano, phenyl, C₁-C₆-alkoxy and C₁-C₆-alkyl.

4. Compounds according to at least one of Claims 1 and 3, **characterized in that** they are the following:
(R)- and (S)-[5,5'-dichloro-6,6'-(cis-1,4-but-2-enedioxy)-biphenyl-2,2'-diyl]-bis-[(diphenyl)-phosphine, (R)- and (S)-[5,5'-dichloro-6,6'-(cis-1,4-but-2-enedioxy)-biphenyl-2,2'-diyl]-bis-[(di-cyclohexyl)phosphine, (R)- and (S)-[5,5'-dichloro-6,6'-(cis-1,4-but-2-enedioxy)-biphenyl-2,2'-diyl]-bis-[(di-3,5-di-tert.-butyl-4-methoxyphenyl) phosphine, (R)- and (S)-[5,5'-dichloro-6,6'-(cis-1,4-but-2-enedioxy)-biphenyl-2,2'-diyl]-bis-[(di-3,5-dimethylphenyl) phosphine, (R)- and (S)-[5,5'-dichloro-6,6'-(cis-1, 4-but-2-enedioxy)-biphenyl-2,2'-diyl]-bis-[(di-3,5-dimethyl-4-methoxyphenyl)phosphine, (R)- and (S)-[5,5'-dichloro-6,6'-(cis-1,4-but-2-enedioxy)-biphenyl-2,2'-diyl]-bis-[(di-4-fluorophenyl) phosphine as well as (R)- and (S)-[5,5'-dichloro-6,6'-(cis-1,4-but-2-enedioxy)-biphenyl-2,2'-diyl]-bis-[(di-3,5-di-tert.-butylphenyl)-phosphine as well as the corresponding trans-compounds, (R)- and (S)-[5, 5'-dichloro-6, 6'-(1,3-propanedioxy)-biphenyl-2,2'-diyl]-bis-[(di-phenyl) phosphine, (R)- and (S)-[5,5'-dichloro-6,6'-(1,3-propanedioxy)-biphenyl-2,2'-diyl]-bis-[(dicyclohexyl) phosphine, (R)- and (S)-[5,5'-dichloro-6,6'-(1,3-propanedioxy)-biphenyl-2,2'-diyl]-bis-[(di-3,5-di-tert.-butyl-4-methoxyphenyl) phosphine, (R)- and (S)-[5,5'-dichloro-6,6'- (1,3-propanedioxy)-biphenyl-2, '-diyl]-bis-[(di-3,5-dimethylphenyl) phosphine, (R)- and (S)-[5,5'-dichloro-6,6'-(1,3-propanedioxy)-biphenyl-2,2'-diyl]-bis-[(di-3,5-dimethyl-4-methoxyphenyl)phosphine, (R)- and (S)-[5,5'-dichloro-6,6'-(1,3-propanedioxy)-biphenyl-2,2'-diyl]-bis-[(di-4-fluorophenyl)phosphine as well as (R)- and (S)-[5,5'-dichloro-6,6'-(1,3-propanedioxy)-biphenyl-2,2'-diyl]-bis-[(di-3,5-di-tert.-butylphenyl)phosphine, the stereoisomers (R)- and (S)-[5,5'-dichloro-6,6'- (1,3-butanedioxy) biphenyl-2,2'-diyl]-bis(diphenylphosphine], the stereoisomers (R)- and (S)-[5,5'-dichloro-6,6'- (1,3-butanedioxy)biphenyl-2,2'-diyl]-bis(diphenylphosphine) and arbitrary mixtures of the enantiomers.

5. Method for producing compounds of Formula (IV) 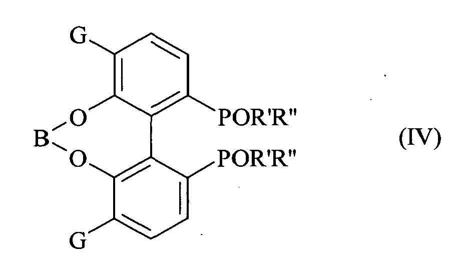 in which B, G, R' and R'' have the meanings mentioned in Claim 1, **characterized in that** compounds of Formula (III) 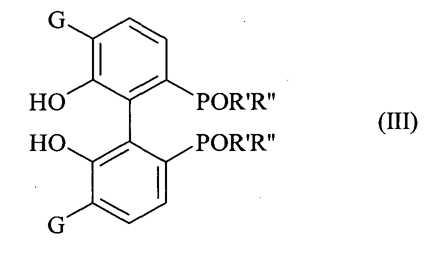 are reacted with a compound of the formula (VIa) or (VIb) or successively with two different compounds of Formulas (VIa) and (VIb)
X³-(CHR¹)ₙ-(R²C=CHR⁵) (VIa)
X⁴-(CHR⁴)ₘ(R³C=CHR⁶) (VIb)
in which X³ and X⁴ in each case represents chlorine, bromine, iodine or a sulfonate and
R¹, R², R³ and R⁴ have the meanings mentioned in Claim 1 and
R⁵ and R⁶ each independently represents hydrogen or C₁-C₄-alkyl
to form compounds of Formula (VII) 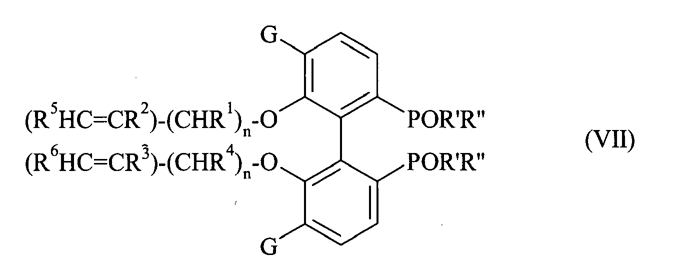 and the compounds of Formula (VII) are then converted in the presence of an olefin metathesis catalyst to compounds of Formula (IV).

6. Method according to Claim 5, **characterized in that** the compounds of Formula (VII) are subsequently reduced to compounds of Formula (I) according to Claim 1.

7. Compounds of Formula (VII) 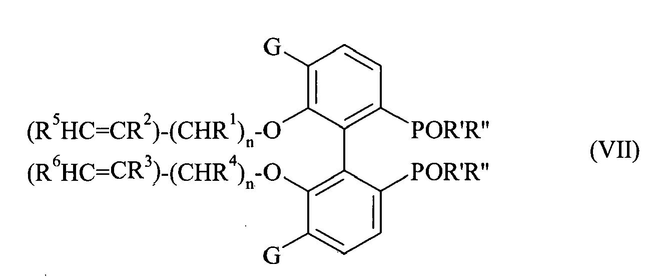 in which G, R¹, R², R³, R⁴, R' and R" have the meanings mentioned in Claim 1 and R⁵ and R⁶ each independently represents hydrogen or C₁-C₄-alkyl.

8. Compounds according to Claim 7, **characterized in that** they are the following:
(R)- and (S)-[5,5'-dichloro-6,6'-(bis-allyloxy)-biphenyl-2,2'-diyl]-bis-[(dicyclohexyl) phosphine oxide, (R)- and (S)-[5,5'-dichloro-6,6'-(bis-allyloxy)-biphenyl-2,2'-diyl]-bis-[(di-3,5-di-tert.-butyl-4-methoxyphenyl) phosphine oxide, (R)- and (S)-[5,5'-dichloro-6,6'-(bis-allyloxy)-biphenyl-2,2'-diyl]-bis-[(di-3,5-dimethylphenyl) phosphine oxide, (R)-and (S)-[5,5'-dichloro-6,6'-(bis-allyloxy)-biphenyl-2,2'-diyl]-bis-[(di-3,5-dimethyl-4-methoxyphenyl) phosphine oxide, (R)- and (S)-[5,5'-dichloro-6,6'-(bis-allyloxy)-biphenyl-2,2'-diyl]-bis-[(di-4-fluorophenyl) phosphine oxide as well as (R)- and (S)-[5,5'-dichloro-6,6'-(bis-allyloxy)-biphenyl-2,2'-diyl]-bis-[(di-3,5-di-tert.-butylphenyl) phosphine oxide.

9. Compounds of Formula (IV) 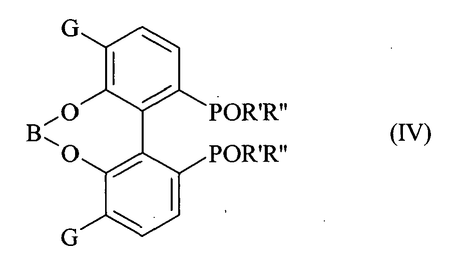 in which B, G, R' and R" have the meanings mentioned in Claim 1.

10. Compounds according to Claim 9, **characterized in that** they are the following:
(R)- and (S)-[5,5'-dichloro-6,6'-(cis-1,4-but-2-ene-dioxy)-biphenyl-2,2'-diyl]-bis-[(di-cyclo-hexyl) phosphine oxide, (R) -and (S)-[5,5'-dichloro-6,6'-(cis-1,4-but-2-ene-dioxy)-biphenyl-2,2'-diyl]-bis-[(di-3,5-di-tert.-butyl-4-methoxyphenyl) phosphine oxide, (R)-and (S)-[5,5'-dichloro-6,6'-(cis-1,4-but-2-ene-dioxy)-biphenyl-2,2'-diyl]-bis-[(di-3,5-dimethylphenyl)phosphine oxide, (R)- and (S)-[5,5'-dichloro-6,6'-(cis-1,4-but-2-enedioxy)-biphenyl-2,2'-diyl]-bis-[(di-3,5-dimethyl-4-methoxyphenyl) phosphine oxide, (R)- and (S)-[5,5'-dichloro-6,6'-(cis-1,4-but-2-enedioxy)-biphenyl-2,2'-diyl]-bis-[(di-4-fluorophenyl) phosphine oxide as well as (R)- and (S)-[5,5'-dichloro-6,6'-(cis-1,4-but-2-enedioxy)-biphenyl-2,2'-diyl]-bis-[(di-3,5-di-tert.-butyl-phenyl) phosphine oxide as well as the respective trans-compounds as well as (R)- and (S)-[5,5'-dichloro-6,6'-(1,3-propanedioxy)-biphenyl-2,2'-diyl]-bis-[(dicyclohexyl) phosphine oxide, (R)- and (S)-[5,5'-dichloro-6,6'-(1,3-propanedioxy)-biphenyl-2,2'-diyl]-bis-[(di-3,5-di-tert.-butyl-4-methoxyphenyl) phosphine oxide, (R)- and (S)-[5,5'-dichloro-6,6'-(1,3-propanedioxy)-biphenyl-2,2'-diyl]-bis-[(di-3,5-dimethylphenyl) phosphine oxide, (R)- and (S)-[5,5'-dichloro-6,6'-(1,3-propanedioxy)-biphenyl-2,2'-diyl]-bis-[(di-3,5-dimethyl-4-methoxyphenyl) phosphine oxide, (R)- and (S)-[5,5'-dichloro-6,6'-(1,3-propanedioxy)-biphenyl-2,2'-diyl]-bis-[(di-4-fluorophenyl) phosphine oxide as well as (R)- and (S)-[5,5'-dichloro-6,6'-(1,3-propanedioxy)-biphenyl-2,2'-diyl]-bis-[(di-3,5-di-tert.-butylphenyl) phosphine oxide, the stereoisomers (R)- [5,5'-dichloro-6,6'- (1,3-butanedioxy)biphenyl-2,2'-diyl]-bis (diphenylphosphine oxide), the stereoisomers (S)- [5,5'-dichloro-6,6'-(1, 3-butanedioxy)biphenyl-2,2'-diyl]-bis(diphenylphosphine oxide) as well as arbitrary mixtures of the enantiomers.

11. Compounds of Formula (III) 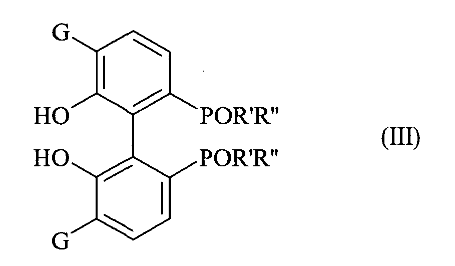 in which G, R' and R" have the meanings mentioned in Claim 1.

12. Compound according to Claim 11, **characterized in that** it is the following: ((S)- [5,5'-dichloro-6,6'-dihydroxybiphenyl-2,2'-diyl]-bis(diphenylphosphine oxide).

13. Transition metal complexes containing compounds according to one or more of Claims 1 to 4.

14. Catalysts containing transition metal complexes according to Claim 13.

15. Method for transition metal-catalyzed manufacturing of enantiomer-enriched compounds, **characterized in that** it is performed in the presence of catalysts according to Claim 14.

16. Use of catalysts according to Claim 14 for asymmetric hydrogenation of prochiral C=C-bonds, C=O-bonds or C=N-bonds.

17. Use of catalysts according to Claim 14 for asymmetric hydrogenation of prochiral ketones.

## Revendications

1. Composés de Formule (I), 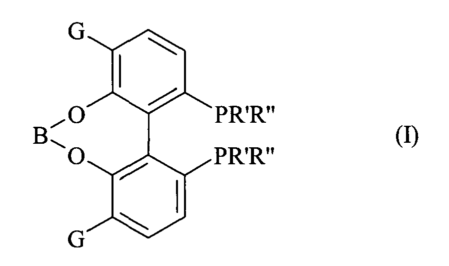 dans lesquels B représente un groupe bivalent de formule -(CHR¹)ₙ-(R²C=CR³)-(CHR⁴)ₘ, où R¹, R², R³ et R⁴ représentent chacun indépendamment un atome d'hydrogène ou un groupe alkyle, et où n et m représentent chacun indépendamment zéro ou un nombre entier compris entre 1 et 8, mais où la somme de n et de m est comprise entre 1 et 8 et dans lesquels en outre
G représente un atome de chlore et où
R' et R" représentent chacun indépendamment un groupe aryle ou alkyle ou
dans lesquels B représente un groupe bivalent de formule -(CHR¹)ₙ-(CR²R³)ₘ-(CHR⁴)ₒ, où R¹, R², R³ et R⁴ représentent chacun indépendamment un atome d'hydrogène ou un groupe alkyle, de préférence en groupe alkyle en C₁-C₆, et où n, m et o représentent chacun indépendamment zéro ou un nombre entier compris entre 1 et 8, mais où la somme de n, de m et de o est comprise entre 1 et 8, où de préférence elle vaut 3 ou 4, et dans lesquels en outre
G représente un atome de chlore et
R' et R" représentent chacun indépendamment un groupe aryle ou alkyle, où
alkyle dans chaque cas représente des radicaux alkyle en C₁-C₁₂ non ramifiés, ramifiés, cycliques ou acycliques , qui peuvent être non substitués ou au moins partiellement substitués par un atome de fluor, de chlore ou un groupe aryle ou alcoxy en C₁-C₆,
aryle représente dans chaque cas des radicaux aromatiques carbocycliques comportant de 6 à 18 atomes de carbone de squelette ou des radicaux hétéroaromatiques comportant de 5 à 18 atomes de carbone de squelette, dans lesquels aucun, un, deux ou trois atomes de carbone de squelette par cycle peuvent être substitués par un substituant choisi dans l'ensemble constitué d'atomes d'azote, de soufre ou d'oxygène, et dans lesquels
les radicaux carbocycliques aromatiques ou hétéroaromatiques peuvent être substitués par jusqu'à cinq substituants, identiques ou différents, choisis dans l'ensemble constitué d'un groupe hydroxy libre ou protégé, d'atomes d'iode, de brome, de chlore, de fluor, de groupes cyano, formyle libre ou protégé, alkyle en C₁-C₁₂, aryle en C₆-C₁₂, alcoxy en C₁-C₆ et tri(alkyle en C1- C6)-siloxyle.

2. Composés selon la Revendication 1, **caractérisés en ce que** R¹, R², R³ et R⁴ représentent chacun indépendamment un atome d'hydrogène, un groupe méthyle, éthyle, n-propyle, isopropyle, n-butyle et n-pentyle.

3. Composés selon au moins une des Revendications 1 et 2, **caractérisés en ce que** R' et R" représentent chacun indépendamment un groupe alkyle en C₃-C₈ ou aryle en C₅-C₁₀, qui peuvent être non substitués, à substitution unique ou à substitution multiple par des radicaux choisis dans l'ensemble constitué des atome de chlore, de fluor, des groupes cyano, phényle, alcoxy en C₁-C₆ et alkyle en C₁-C₆.

4. Composés selon au moins une des Revendications 1 et 3, **caractérisés en ce qu'**il s'agit de l'un des suivants :
(R)- et (S)-[5,5'-dichloro-6,6'- (cis-1,4-but-2-ènedioxy) -biphényl-2,2'-diyl]-bis-[(diphényl)-phosphine, (R)- et (S)-[5,5'-dichloro-6,6'-(cis-1,4-but-2-ènedioxy)-biphényl-2, 2'-diyl]-bis-[(di-cyclohexyl)phosphine, (R)- et (S)-[5,5'-dichloro-6,6'-(cis-1,4-but-2-ènedioxy)-biphényl-2,2'-diyl]-bis-[(di-3,5-di-tert.-butyl-4-méthoxyphényl)phosphine, (R)- et (S)-[5,5'-dichloro-6,6'-(cis-1,4-but-2-ènedioxy)-biphényl-2,2'-diyl]-bis-[(di-3,5-diméthylphényl)phosphine, (R)- et (S)-[5,5'-dichloro-6,6'-(cis-1, 4-but-2-ènedioxy)-biphényl-2,2'-diyl]-bis-[(di-3,5-diméthyl-4-méthoxyphényl)phosphine, (R)- et (S)-[5,5'-dichloro-6,6'-(cis-1,4-but-2-ènedioxy)-biphényl-2,2'-diyl]-bis-[(di-4-fluorophényl) phosphine ainsi que (R)- et (S)-[5,5'-dichloro-6,6'-(cis-1,4-but-2-ènedioxy)-biphényl-2,2'-diyl]-bis-[(di-3,5-di-tert.-butylphényl)-phosphine ainsi que les composés trans correspondants, (R)- et (S)-[5, 5'-dichloro-6, 6'-(1,3-propanedioxy)-biphényl-2,2'-diyl]-bis-[(di-phényl)phosphine, (R)- et (S)-[5,5'-dichloro-6,6'-(1,3-propanedioxy)-biphényl-2,2'-diyl]-bis-[(dicyclohexyl)phosphine, (R)- et (S)-[5,5'-dichloro-6,6'-(1,3-propanedioxy)-biphényl-2,2'-diyl]-bis-[(di-3,5-di-tert.-butyl-4-méthoxyphényl)phosphine, (R)- et (S)-[5,5'-dichloro-6,6'-(1,3-propanedioxy)-biphényl-2,'-diyl]-bis-[(di-3,5-diméthylphényl)phosphine, (R)- et (S)-[5,5'-dichloro-6,6'-(1,3-propanedioxy)-biphényl-2,2'-diyl]-bis-[(di-3,5-diméthyl-4-méthoxyphényl)phosphine, (R)- et (S)-[5,5'-dichloro-6,6'-(1,3-propanedioxy)-biphényl-2,2'-diyl]-bis-[(di-4-fluorophényl)phosphine ainsi que (R)- et (S)-[5,5'-dichloro-6,6'-(1,3-propanedioxy)-biphényl-2,2'-diyl]-bis-[(di-3,5-di-tert.-butylphényl)phosphine, les stéréo-isomères (R)- et (S)-[5,5'-dichloro-6,6'- (1,3-butanedioxy)biphényl-2,2'-diyl]-bis(diphénylphosphine], les stéréo-isomères (R)- et (S)-[5,5'-dichloro-6,6'-(1,3-butanedioxy)biphényl-2,2'-diyl]-bis(diphénylphosphine) et des mélanges arbitraires des énantiomères.

5. Procédé de production de composés de Formule (IV) 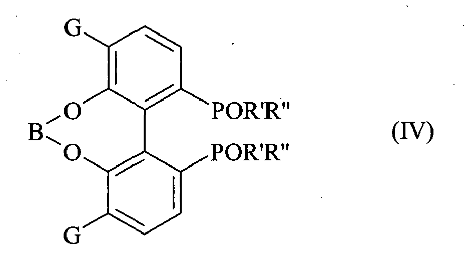 dans lesquels B, G, R' et R'' ont les significations mentionnées dans la Revendication 1, **caractérisés en ce que** l'on fait réagir les composés de Formule (III) 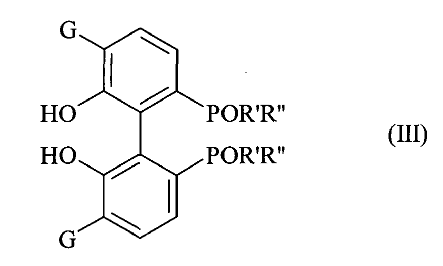 avec un composé de formule (VIa) ou (VIb) ou successivement avec deux composés différents de Formules (VIa) et (VIb)
X³-(CHR¹)ₙ-(R²C=CHR⁵) (VIa)
X⁴-(CHR⁴)ₘ(R³C=CHR⁶) (VIb)
dans lesquels X³ et X⁴ représentent dans chaque cas un atome de chlore, de brome, d'iode ou un sulfonate et où
R¹, R², R³ et R⁴ ont les significations mentionnées dans la Revendication 1 et
R⁵ et R⁶ représentent chacun indépendamment un atome d'hydrogène ou un groupe alkyle en C₁-C₄
pour former des composés de Formule (VII) 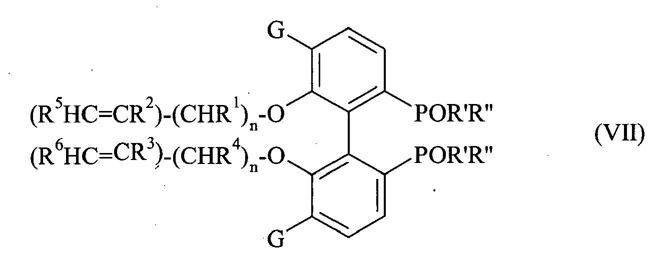 et où les composés de Formule (VII) sont ensuite convertis en composés de Formule (IV), en présence d'un catalyseur de métathèse d'oléfine.

6. Procédé selon la Revendication 5, **caractérisé en ce que** les composés de Formule (VII) sont ensuite réduits en composés de Formule (I) selon la Revendication 1.

7. Composés de Formule (VII) 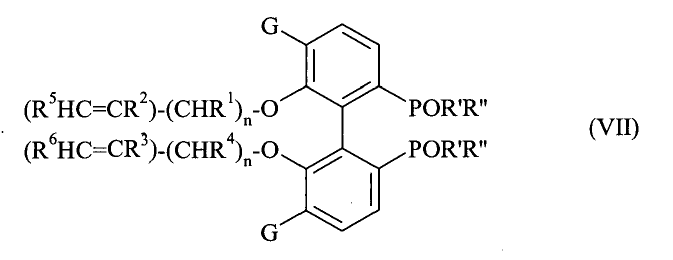 dans lesquels G, R¹, R², R³, R⁴, R' et R" ont les significations mentionnées dans la Revendication 1 et où
R⁵ et R⁶ représentent chacun indépendamment un atome d'hydrogène ou un groupe alkyle en C₁-C₄.

8. Composés selon la Revendication 7, **caractérisés en ce qu'**il s'agit de l'un des suivants :
oxyde de (R)- et (S)-[5,5'-dichloro-6,6'-(bis-allyloxy)-biphényl-2,2'-diyl]-bis-[(dicyclohexyl)phosphine, oxyde de (R)- et (S)-[5,5'-dichloro-6,6'-(bis-allyloxy)-biphényl-2,2'-diyl]-bis-[(di-3,5-di-tert.-butyl-4-méthoxyphényl)phosphine, oxyde de (R)- et (S)-[5,5'-dichloro-6,6'-(bis-allyloxy)-biphényl-2,2'-diyl]-bis-[(di-3,5-diméthylphényl)phosphine, oxyde de (R)- et (S)-[5,5'-dichloro-6,6'-(bis-allyloxy)-biphényl-2,2'-diyl]-bis-[(di-3,5-diméthyl-4-méthoxyphényl) phosphine, oxyde de (R)- et (S)-[5,5'-dichloro-6,6'-(bis-allyloxy)-biphényl-2,2'-diyl]-bis-[(di-4-fluorophényl) phosphine ainsi que oxyde de (R)- et (S)-[5,5'-dichloro-6,6'-(bis-allyloxy)-biphényl-2,2'-diyl]-bis-[(di-3,5-di-tert.-butylphényl)phosphine.

9. Composés de Formule (IV) 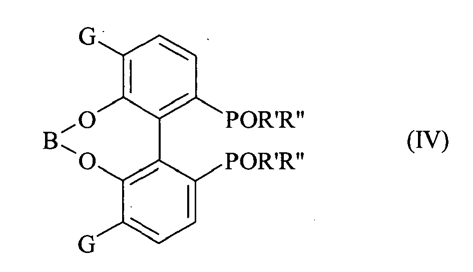 dans lesquels B, G, R' et R" ont les significations mentionnées dans la Revendication 1.

10. Composés selon la Revendication 9, **caractérisés en ce qu'**il s'agit de l'un des suivants :
oxyde de (R)- et (S)-[5,5'-dichloro-6,6'-(cis-1,4-but-2-ène-dioxy)-biphényl-2,2'-diyl]-bis-[(di-cyclo-hexyl)phosphine, oxyde de (R) - et (S)-[5,5'-dichloro-6,6'-(cis-1,4-but-2-ène-dioxy)-biphényl-2,2'-diyl]-bis-[(di-3,5-di-tert.-butyl-4-méthoxyphényl) phosphine, oxyde de (R)- et (S)-[5,5'-dichloro-6,6'-(cis-1,4-but-2-ène-dioxy)-biphényl-2,2'-diyl]-bis-[(di-3,5-diméthylphényl)phosphine, oxyde de (R)- et (S)-[5,5'-dichloro-6,6'-(cis-1,4-but-2-ènedioxy)-biphényl-2,2'-diyl]-bis-[(di-3,5-diméthyl-4-méthoxyphényl)phosphine, oxyde de (R)- et (S)-[5,5'-dichloro-6,6'-(cis-1,4-but-2-ènedioxy)-biphényl-2,2'-diyl]-bis-[(di-4-fluorophényl)phosphine ainsi que oxyde de (R)- et (S)-[5,5'-dichloro-6,6'-(cis-1,4-but-2-ènedioxy)-biphényl-2,2'-diyl]-bis-[(di-3,5-di-tert.-butyl-phényl)phosphine ainsi que les composés trans respectifs, ainsi que oxyde de (R)- et (S)-[5,5'-dichloro-6,6'-(1,3-propanedioxy)-biphényl-2,2'-diyl]-bis-[(dicyclohexyl)phosphine, oxyde de (R)- et (S)-[5,5'-dichloro-6,6'-(1,3-propanedioxy)-biphényl-2,2'-diyl]-bis-[(di-3,5-di-tert.-butyl-4-méthoxyphényl)phosphine, oxyde de (R)- et (S)-[5,5'-dichloro-6,6'-(1,3-propanedioxy)-biphényl-2,2'-diyl]-bis-[(di-3,5-diméthylphényl)phosphine, oxyde de (R)- et (S)-[5,5'-dichloro-6,6'-(1,3-propanedioxy)-biphényl-2,2'-diyl]-bis-[(di-3,5-diméthyl-4-méthoxyphényl) phosphine, oxyde de (R)- et (S)-[5,5'-dichloro-6,6'-(1,3-propanedioxy)-biphényl-2,2'-diyl]-bis-[(di-4-fluorophényl)phosphine ainsi que oxyde de (R)- et (S)-[5,5'-dichloro-6,6'-(1,3-propanedioxy)-biphényl-2,2'-diyl]-bis-[(di-3,5-di-tert.-butylphényl)phosphine, les stéréo-isomères (R)- [5,5'-dichloro-6,6'- (1,3-butanedioxy)biphényl-2,2'-diyl]-bis(oxyde de diphénylphosphine), les stéréo-isomères (S)- [5,5'-dichloro-6,6'-(1, 3-butanedioxy)biphényl-2,2'-diyl]-bis(oxyde de diphénylphosphine) ainsi que des mélanges arbitraires des énantiomères.

11. Composés de Formule (III) 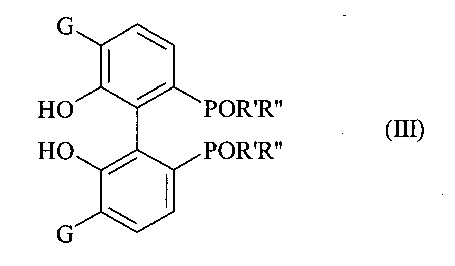 dans lesquels G, R' et R" ont les significations mentionnées dans la Revendication 1.

12. Composé selon la Revendication 11, **caractérisé en ce qu'**il s'agit du suivant : ((S)-[5,5'-dichloro-6,6'-dihydroxybiphényl-2,2'-diyl]-bis(oxyde de diphénylphosphine).

13. Complexes de métaux de transition contenant des composés selon au moins une des Revendications 1 à 4.

14. Catalyseurs contenant des complexes de métaux de transition selon la Revendication 13.

15. Procédé de fabrication catalysée par des métaux de transition de composés enrichis d'énantiomères, **caractérisé en ce qu'**il est mis en oeuvre en présence de catalyseurs conformes à la Revendication 14.

16. Emploi de catalyseurs selon la Revendication 14, destiné à l'hydrogénation asymétrique de liaisons C=C-, de liaisons C=O- ou de liaisons C=N- prochirales.

17. Emploi de catalyseurs selon la Revendication 14, destiné à l'hydrogénation asymétrique de cétones prochirales.
